# EUROPEAN PATENT APPLICATION

(11) **EP 2 061 133 A2**
(43) Date of publication of application: **20.05.2009**
(21) Application number: 08019955.7
(22) Date of filing: 14.11.2008
(51) Int. Cl.: H02K 3/50

(54) **Rotating electric machine and vehicle-mounted electric machine system equipped with the same**

(30) Priority: 16.11.2007 JP 2007298052
(71) Applicant: Hitachi Ltd., Chiyoda-ku Tokyo 100-8280 (JP)
(72) Inventor: Shimizu, Hisaya, Tokyo 100-8220 (JP); Umesaki, Yosuke, Tokyo 100-8220 (JP); Yoshida, Kenichi, Tokyo 100-8220 (JP); Ichikawa, Kohei, Tokyo 100-8220 (JP); Mori, Yoshimi, Tokyo 100-8220 (JP)
(74) Representative: Matias, Bruno M.

(57) **Abstract**

A rotating electric machine includes a stator 1 and a rotor 6. The stator 1 includes an annular stator core 5 and a stator winding 3 that is a star connection of flat wire coils. Lead wires 3U-IB, 3U-IIB, .. of the stator winding 3 extend from other coil ends substantially in parallel with an axial direction of the rotating electric machine. A neutral conductor connection device 100 has a neutral point connection bus bar 101 formed of a conductive plate. The neutral conductor connection device 100 connects between lead wires forming neutral conductors of the star connection.

## Description

### BACKGROUND OF THE INVENTION

### 1. Field of the Invention

The present invention relates in general to a rotating electric machine and a vehicle-mounted electric machine system equipped with the same and, typically, to a technique for improving productivity of the rotating electric machine.

### 2. Description of Related Art

A known art relating to a rotating electric machine is disclosed, for example, in JP-A-2002-354736. The art disclosed in JP-A-2002-354736 includes an armature winding (which corresponds to a stator winding in JP-A-2002-354736) formed from a plurality of segment conductors, each being formed by forming a flat wire with a rectangular section into a U-shape. Other known types of windings include a round wire with a circular section wound around an iron core a predetermined number of times or a round wire wound a predetermined number of times incorporated into an iron core (see, for example, JP-A-9-19119).

### SUMMARY OF THE INVENTION

A need exists for a low-cost rotating electric machine with varying situations depending on the field of the product on which the rotating electric machine is to be mounted. In automobiles, for example, efforts are being made toward implementation of electric driving in drive sources for vehicles or vehicle-mounted auxiliaries in view of consideration for global environment and improved fuel efficiency. The need for the low-cost rotating electric machine that will serve as the drive source thus represents acceleration of further diffusion of implementation of electric driving in the future. What is needed in meeting this need is to reduce the number of parts used in the rotating electric machine for reduced materials cost and enhance productivity of the rotating electric machine thereby achieving an arrangement better suited to mass production. As a means of enhancing productivity of the rotating electric machine of the foregoing needs, an improved wire-winding procedure for the rotating electric machine can be one solution.

One winding may be of a simple structure, while another, for example, an armature winding, is formed by connecting ends of a plurality of windings, each being formed in a predetermined unit, into a single winding. In such a winding, an improved workability results if the plurality of windings are connected together using a wire-connection device as disclosed, for example, in JP-A-9-19119.

In recent years, however, more and more rotating electric machines are built compactly to meet the need for smaller space requirements. Another need for greater power output accelerates the pace of achieving higher density winding. When improving the wire-winding procedure for the rotating electric machine using the wire-connection device, therefore, it is required to respond to reduction in size and higher density winding of the rotating electric machine.

It is an object of the present invention to provide a rotating electric machine that facilitates the manufacture and control of windings.

It is another object of the present invention to provide a rotating electric machine that can respond to reduction in size and higher densities of winding and improve workability of wire-winding procedures.

It is still another object of the present invention to provide a rotating electric machine that can improve workability of wire-winding procedures and use a compact wire-connection device.

It is a further object of the present invention to provide a vehicle-mounted electric machine system equipped with the rotating electric machine.

A rotating electric machine according to a typical aspect of the present invention includes a neutral conductor connection device disposed on an axial one side end of a stator core and having a conductive plate and a resin molding disposed on the conductive plate so as to mold part of the conductive plate. A stator winding has a plurality of lead wires extending further axially than a leading end of a winding end of the stator winding formed on the axial one side end of the stator core. A plurality of lead wires on a neutral point side of the plurality of lead wires is connected by the conductive plate of the neutral conductor connection device.

According to the typical aspect of the present invention, the number of types of deformed lines of the lead wires can be reduced, so that manufacture and control of windings can be facilitated.

A rotating electric machine according to another typical aspect of the present invention includes a winding termination device. The winding termination device includes, at an end on a first side of the core: a neutral point side connection conductor electrically connecting a plurality of neutral point side terminal conductors of a plurality of terminal conductors of a plurality of phase windings that make up a polyphase winding; a terminal block formed from a resin having an insulating property; and a plurality of external terminals electrically connected to a plurality of external lead-out side terminal conductors of the plurality of terminal conductors. The terminal block molds part of the neutral point side connection conductor to be disposed on the neutral point side connection conductor. Further, the plurality of external terminals has connections with other conductors placed on the terminal block.

A rotating electric machine according to still another typical aspect of the present invention includes a winding termination device. The winding termination device includes, at an end on a first side of the core: a neutral point side connection conductor electrically connecting a plurality of neutral point side terminal conductors of a plurality of terminal conductors of a plurality of phase windings that make up a polyphase winding; an external lead-out side connection conductor electrically connecting a plurality of external lead-out side terminal conductors and a plurality of external terminals of the plurality of terminal conductors; a neutral point side connection terminal withdrawn from the neutral point side connection conductor to the neutral point side terminal conductor and connected to the neutral point side terminal conductor; and/or an external lead-out side connection terminal withdrawn from the external lead-out side connection conductor to the external lead-out side terminal conductor and connected to the external lead-out side terminal conductor. The plurality of phase windings is formed as a distributed wave winding. The neutral point side terminal conductor and the external lead-out side terminal conductor are withdrawn from the end of the core onto a side of the winding termination device so as to be disposed closely to each other for each phase. Further, the neutral point side connection terminal and/or the external lead-out side connection terminal are disposed closely to each other for each phase so as to correspond to positions at which the neutral point side terminal conductor and the external lead-out side terminal conductor are disposed.

In accordance with the typical aspect of the present invention, a rotating electric machine that facilitates the manufacture and control of the winding can be provided.

In accordance with the typical aspect of the present invention, a rotating electric machine that can respond to size reduction and higher density winding and improve workability of wire-winding procedures can be provided.

In accordance with the typical aspect of the present invention, a rotating electric machine that can improve workability of wire-winding procedures and offer a compact wire connection device for winding can be provided.

Further, in accordance with the typical aspect of the present invention, a vehicle-mounted electric machine system equipped with the above-referenced rotating electric machine can be provided.

### BRIEF DESCRIPTION OF THE DRAWINGS

Fig. 1 is a cross-sectional view of a principal part showing a general construction of a rotating electric machine according to a first embodiment of the present invention.
Fig. 2 is a side elevational view showing the rotating electric machine according to the first embodiment of the present invention.
Fig. 3 is a connection diagram of a stator coil used in the rotating electric machine according to the first embodiment of the present invention.
Figs. 4A, 4B, 4C, and 4D are perspective views showing the shape of a segment coil and a lead wire used in the stator coil of the rotating electric machine according to the first embodiment of the present invention.
Fig. 5 is an exploded perspective view showing the wire connection structure at an insertion side end of the stator coil of the rotating electric machine according to the first embodiment of the present invention.
Fig. 6 is a connection diagram showing connections at the insertion side end of the stator coil of the rotating electric machine according to the first embodiment of the present invention.
Fig. 7 is a plan view showing a positional relation between a neutral conductor connection device used in the rotating electric machine according to the first embodiment of the present invention and input/output terminals, as viewed from an axial end of the rotating electric machine.
Fig. 8 is an enlarged front view showing the shape of a joint of the neutral conductor connection device used in the rotating electric machine according to the first embodiment of the present invention.
Fig. 9 is an enlarged front view showing the condition of the joint of the neutral conductor connection device used in the rotating electric machine according to the first embodiment of the present invention.
Fig. 10 is a perspective view showing a modified example of a neutral conductor connection device used in the rotating electric machine according to the first embodiment of the present invention and input/output terminals, as viewed from an axial end of the rotating electric machine.
Fig. 11 is a perspective view showing the wire connection structure at an insertion side end of a stator coil of a rotating electric machine according to a second embodiment of the present invention.
Fig. 12 is a side elevational view showing the rotating electric machine according to the second embodiment of the present invention.
Fig. 13 is a partial perspective view showing the rotating electric machine according to a third embodiment of the present invention.
Fig. 14 is a schematic view showing a drive system for a four-wheel-drive hybrid electric vehicle having no motor drive battery according to a fourth embodiment of the present invention.
Fig. 15 is a perspective view showing the external appearance of a vehicle drive system integrating a motor and inverter, as applied to the drive system shown in Fig. 14.

### DESCRIPTION OF THE PREFERRED EMBODIMENTS

Embodiments to which the present invention is applied will be described below with reference to drawings.

### [First Embodiment]

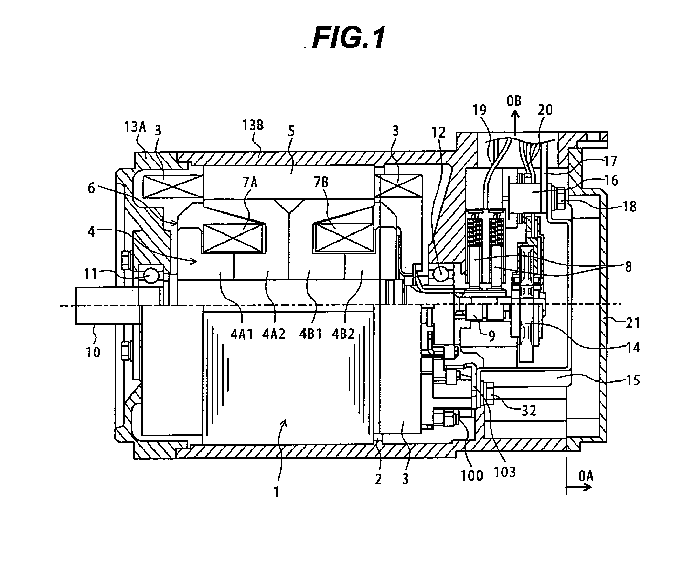

A rotating electric machine according to a first embodiment of the present invention will be described below with reference to Figs. 1 through 10.

The first exemplary embodiment of the present invention to be described below is a field winding synchronous three-phase AC rotating electric machine having a Lundell-type rotor, to which the present invention is applied.

The arrangement to be described below is also applicable to a permanent magnet synchronous three-phase AC rotating electric machine having a rotor that uses a permanent magnet as a field source or an induction three-phase AC rotating electric machine having a rotor that incorporates a plurality of conductors electrically connected with a short-circuit ring.

Referring to Fig. 1, the construction of the field winding synchronous three-phase AC rotating electric machine (hereinafter referred to simply as "rotating electric machine") will be described.

Fig. 1 shows the general construction of the rotating electric machine.

The rotating electric machine includes a casing, an armature side stator 1, a field side rotor 6, a field current supply system, a rotation sensor 14, and a connection system connecting an external controller (inverter unit) and the stator 1.

The stator 1 is fixed inside the casing. The rotor 6 is disposed on the inside of the stator 1. The rotor 6 is concentrically opposed to the stator 1 via an air gap and rotatably supported by the casing. The field current supply system, the rotation sensor 14, and the connection system are disposed on a first side in an axial direction of the stator 1 and the rotor 6 in a condition of being spaced apart from the stator 1 and the rotor 6 by part of the casing. The casing, the stator 1, the rotor 6, and the rotation sensor 14 are concentrically disposed relative to a central axis of rotation.

The casing is a body for accommodating therein the stator 1, the rotor 6, the field current supply system, the rotation sensor 14, and the connection system. The casing includes a housing 13B, a bracket 13A, and a rear cover 21. The housing 13B, the bracket 13A, and the rear cover 21 are each formed from a metal member made of aluminum.

The housing 13B is a tubular body having a circular axial cross-sectional shape on the inside. The housing 13B includes a first accommodation section and a second accommodation section axially juxtaposed across a bracket integrally formed with the housing 13B. The first accommodation section (on the left looking Fig. 1) accommodates therein the stator 1 and the rotor 6. The second accommodation section (on the right looking Fig. 1) accommodates therein the field current supply system, the rotation sensor 14, and the connection system.

The first accommodation section includes an opening formed on an end thereof opposite the second accommodation section. The opening has a circular axial cross-sectional shape. The opening in the first accommodation section has a diameter equal to the inside diameter of the housing 13B. The second accommodation section includes an opening OA formed on an end thereof opposite the first accommodation section. The opening OA has a circular axial cross-sectional shape. The opening OA has a diameter equal to the inside diameter of the housing 13B. A bearing 12 is secured to the bracket that is integrally formed with the housing 13B to ensure that an axis is disposed on the central axis of rotation. The second accommodation section includes an opening OB formed at part of a peripheral wall thereof. The opening OB opens to the external controller (inverter unit).

The bracket 13A is secured to an axial end of the housing 13B on the side of the first accommodation section with a fastening member to close the opening in the first accommodation section. A bearing 11 is secured to the bracket 13A to ensure that the axis is disposed on the central axis of rotation.

The rear cover 21 is secured to an axial end of the housing 13B on the side of the second accommodation section with a fastening member to close the opening OA in the second accommodation section. The opening OA may be used as a work window, through which the field current supply system, the rotation sensor 14, and the connection system are installed or the connection is made between the external controller (inverter unit) and the stator 1, or as an inspection window for checking the foregoing components for condition or replacing parts. The opening OA can be easily opened or closed by removing or reinstalling the rear cover 21.

The stator 1 includes an annular stator core (stator iron core) 5 and a stator coil (armature winding) 3 mounted on the stator core 5.

The stator core 5 includes a cylindrical portion (yoke) and a plurality of magnetic pole portions (teeth) protruding from an inner peripheral surface of the cylindrical portion toward the central axis of rotation (diametrically inwardly). The stator core 5 is secured through a shrink fit in an inner peripheral side of the first accommodation section of the housing 13B. A laminated core is used as the stator core 5. The laminated core is a plurality of magnetic steel sheets fixed together as follows. Specifically, the plurality of magnetic steel sheets, each being an annular thin sheet, is laminated axially and the resultant laminate is welded in the laminated direction at several points on an outer peripheral side thereof. The magnetic steel sheet of annular thin sheet includes a ring sheet portion that corresponds to the cylindrical portion and a protruded sheet portion that corresponds to the magnetic pole portion, both integrally formed together. A press machine is used to blank out the magnetic steel sheet from a strip thin sheet of magnetic steel sheet.

The cylindrical portion mechanically joins the plurality of magnetic pole portions circumferentially and magnetically connects the plurality of magnetic pole portions.

The magnetic pole portions are disposed, each equally spaced apart from each other, on the inner peripheral side of the cylindrical portion. As a result, a plurality of slot portions corresponding in number with the magnetic pole portions is disposed circumferentially, each being disposed between each of two circumferentially adjoining magnetic pole portions and each being equally spaced apart from each other.

In the exemplary first preferred embodiment of the present invention, the stator will be described as having 72 magnetic pole portions (72 slots). The number of magnetic pole portions may be any other than 72; specifically, there may, for example, be 36 or 98 magnetic pole portions corresponding in number with the number of magnetic poles of the rotor.

The stator coil 3 is formed of a plurality of coil conductors (segment coil to be described later) inserted via insulation paper 2 in the plurality of slots formed in the stator core 5. The stator coil 3 is wave wound relative to the stator core 5.

The plurality of coil conductors is connected at both axial ends of the stator core 5 so as to obtain a wye (star) winding circuit having a neutral point. At a first axial side (on the side of the bracket 13A) of the stator core 5, the plurality of coil conductors is connected through welding of ends of the coil conductors. At a second axis side (on the side of the bracket integrally formed with the housing 13B) of the stator core 5, the plurality of coil conductors is connected using a neutral conductor connection device 100. The neutral conductor connection device 100 has an input/output terminal 103 for each phase. The input/output terminal 103 is electrically connected to the external controller via a connection device. This allows an electric power to be exchanged between the stator coil 3 and the external controller.

The Lundell-type rotor 6, which includes a shaft 10, a magnetic pole 4, and a field winding 7, is rotatably supported. The magnetic pole 4 of a claw-pole type is fitted in the outer periphery of the shaft 10. The field winding 7 is mounted on the magnetic pole 4.

The magnetic pole 4 is what is called the tandem type having two pairs of claw magnetic poles fitted in the outer periphery of the shaft 10. A first pair (second pair) of the two pairs of claw magnetic poles is composed of a claw magnetic pole 4A1 (4B1) magnetized with one of an N-pole or an S-pole and a claw magnetic pole 4A2 (4B2) magnetized with the other of the N-pole or the S-pole, the claw magnetic poles 4A1, 4A2 (4B1, 4B2) being disposed so as to oppose each other axially and such that claws thereof are disposed circumferentially alternately. A total of 12 claws are formed, six each claws being formed on one of the paired claw magnetic poles and on the other of the paired claw magnetic poles.

The field winding 7 is wound around each of the two pairs of claw magnetic poles. A field winding 7A (7B) is wound around a cylindrical portion on an inner peripheral side of the claws of the claw magnetic poles 4A1, 4A2 (4B1, 4B2) via a bobbin having an insulation property. The field windings 7A, 7B are wound circumferentially relative to the cylindrical portions of the claw magnetic poles thereof.

The shaft 10 is supported rotatably by the bearings 11, 12 at positions axially outwardly of the magnetic pole 4. The shaft 10 extends further outwardly axially than the bearings 11, 12. The shaft 10 has an end on a first side thereof penetrating through the bearing 11 and protruding to an outside of the casing from the bracket 13A. The shaft 10 thereby constitutes an output shaft that transmits a rotating force of the rotor 6 to the outside or receives that from the outside. The shaft 10 further has another end on a second side thereof penetrating through the bearing 12 and protruding into the second accommodation section from the first accommodation section of the housing 13B. Two slip rings 9 are provided on an outer peripheral surface of the end on the second side of the shaft 10. The slip ring 9 is a power feed ring (annular conductive member) rotating with the shaft 10. The slip ring 9 is electrically connected to the field winding 7 (7A, 7B) through a lead.

The field current supply system supplies field current from an external power supply to the field winding 7 (7A, 7B), including a brush holder and two brushes 8 held thereby.

The brush 8 is disposed at a position to oppose an outer peripheral surface of the slip ring 9. The brush 8 is pressed toward the central axis of rotation from a diametric outside to be in contact with the outer peripheral surface of the slip ring 9. This establishes an electric connection between the brush 8 and the slip ring 9, so that field current can be transferred between the brush 8 and the slip ring 9 that makes a sliding contact with a leading end surface of the brush 8. The brush 8 is connected with a field lead 19. The field lead 19 is guided to the outside through the opening OB and connected to the external controller (voltage regulator).

The brush holder is fixed to an end face of the bracket integrally formed with the housing 13B on a side adjacent the second accommodation section. While holding the brush 8, the brush holder presses the diametric outside of the brush 8 with an elastic force of a spring or other spring mechanism. A molding formed from a resin having an insulation property is used for the brush holder.

The rotation sensor 14 detects the direction and speed of rotation of the rotating electric machine. A resolver system is incorporated in the rotating electric machine according to the first embodiment of the present invention. The resolver system includes a resolver rotor and a resolver stator. Specifically, the resolver rotor is mounted at a leading end of the second side of the shaft 10 and rotates with the shaft 10. The resolver stator is disposed on an outer peripheral side of the resolver rotor via an air gap and fixed to the brush holder. The resolver system is adapted to produce a signal output from the resolver stator according to a magnetic change produced as a result of rotation of the resolver rotor.

The resolver stator of the rotation sensor 14 is connected with a rotation sensor lead 20. The rotation sensor lead 20 is guided to the outside through the opening OB and connected to a control circuit of the external controller (inverter unit). An output signal from the rotation sensor 14 is transmitted through the rotation sensor lead 20 to the control circuit of the external controller.

The connection system establishes a connection for each phase between the input/output terminal 103 and the power control circuit of the external controller (inverter unit). The connection system includes an intermediate bus bar 15, an external power terminal 17, and a terminal block 16.

The intermediate bus bar 15 has a first end electrically connected to the input/output terminal 103. Specifically, the first end of the intermediate bus bar 15, which is in a condition of overlapping with the input/output terminal 103, is fixed to the neutral conductor connection device 100 with a bolt 32. In addition, the intermediate bus bar 15 has a second end (the side opposite the input/output terminal 103) electrically connected to the external power terminal 17. Specifically, the second end of the intermediate bus bar 15, which is in a condition of overlapping with the external power terminal 17, is fixed to the terminal block 16 with a bolt 18.

The external power terminal 17 has a distal end (the side opposite the intermediate bus bar 15) extending toward the external controller by way of the opening OB.

The terminal block 16 is a molding formed from a resin having an insulation property and fixed to the brush holder by a fastening member.

The field current supplied from the external power supply and controlled by the external controller (voltage regulator) is supplied, in sequence, via the field lead 19, the brush 8, the slip ring 9, and lead wiring to the field winding 7 (7A, 7B) and energizes the field winding 7 (7A, 7B). This produces a magnetic flux in the two pairs of claw magnetic poles, so that corresponding ones (e.g. the claw magnetic poles 4A1, 4B1) of the two pairs of claw magnetic poles are magnetized with N-pole, while corresponding the others (e.g. the claw magnetic poles 4A2, 4B2) of the two pairs of claw magnetic poles are magnetized with S-pole, respectively.

If the rotating electric machine operates as an electric motor, three-phase armature current is supplied to the stator coil 3 from the external controller (inverter unit). This generates, in the stator 1, a rotating magnetic field, in which the N-pole and the S-pole rotate at a synchronous speed. The rotor 6 is rotated by a magnetically acting force with respect to the stator 1 in synchronism with the synchronous speed of the rotating magnetic field and torque generated by the rotation is outputted from the output shaft.

If the rotating electric machine operates as a generator, the rotor 6 rotates by receiving torque from the outside. When the rotor 6 rotates, a field magnetic flux interlinks with the stator coil 3. This generates an induced voltage. As a result, three-phase alternating current is supplied from the stator coil 3 to the external controller (inverter unit).

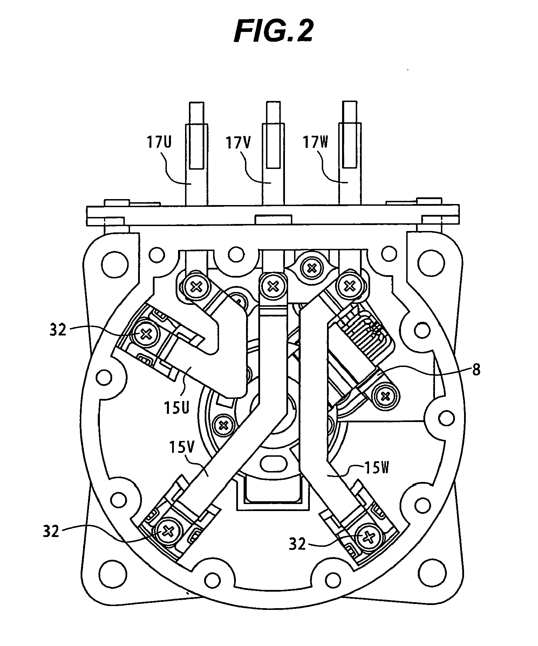

The construction of the connection system will be described in detail below with reference to Fig. 2.

Fig. 2 shows the opening OA in the rotating electric machine with the rear cover 21 removed and as viewed from the axial direction.

The external power terminal 17 includes a U-phase external power terminal 17U, a V-phase external power terminal 17V, and a W-phase external power terminal 17W to correspond to respective phases of the three-phase stator coil 3. Each of the external power terminals 17U to 17W is a slender flat conductor. The external power terminals 17U to 17W are disposed in parallel with, and spaced apart from, each other on a plane perpendicular to the central axis of rotation. Further, the external power terminals 17U to 17W penetrate through the opening OB and extend linearly toward the external controller. The opening OB has a rectangular cross section so that the external power terminals 17U to 17W can penetrate therethrough in the above-described conditions.

In the same manner as the external power terminal 17, the intermediate bus bar 15 includes a U-phase intermediate bus bar 15U, a V-phase intermediate bus bar 15V, and a W-phase intermediate bus bar 15W to correspond to respective phases of the three-phase stator coil 3. Each of the intermediate bus bars 15U to 15W is a slender flat conductor like the external power terminals 17U to 17W.

The neutral conductor connection device 100 is accommodated in the first accommodation section. As shown in Fig. 2, the input/output terminal 103 included in the neutral conductor connection device 100 is disposed circumferentially dispersedly and exposed to the second accommodation section through an opening in the bracket integrally formed with the housing 13B. In addition, the field current supply system and the rotation sensor 14 are accommodated in the second accommodation section. This makes it necessary to consider the foregoing arrangements when routing the intermediate bus bars 15U to 15W inside the second accommodation section. This explains why each of the intermediate bus bars 15U to 15W is bent in a unique way and has a unique conductor length.

Each of the intermediate bus bars 15U to 15W first extends perpendicularly relative to a corresponding one of the input/output terminals 103 in a direction of extending axially away from the first accommodation section. The intermediate bus bar 15 then extends in the direction axially away from the first accommodation section further than the rotation sensor 14. The intermediate bus bar 15 thereafter bends at right angles diametrically and extends along a plane perpendicular to the central axis of rotation toward the terminal block 16. At a point near the terminal block 16, the intermediate bus bar 15 bends at right angles toward the first accommodation section in the axial direction and bends again diametrically at right angles, so that a leading end thereof can be placed on the terminal block 16 together with the external power terminal 17.

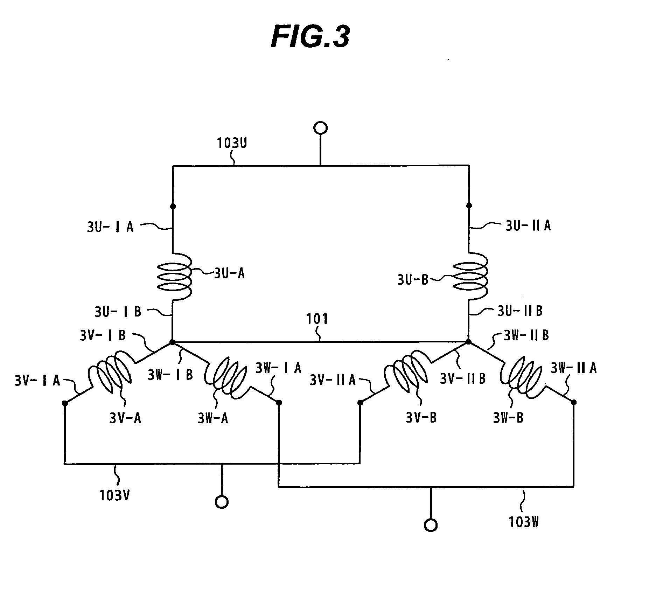

Referring to Fig. 3, the circuit configuration of the stator coil 3 will be described below.

Fig. 3 shows a connection circuit of the stator coil 3.

The stator coil 3 comprises two wye-connected three-phase coils electrically connected in parallel with each other.

A first three-phase coil has a star connection that connects, to form a first neutral point, a first U-phase lead wire 3U-IB connected to an end of a first U-phase coil 3U-A on the side of the neutral point, a first V-phase lead wire 3V-IB connected to an end of a first V-phase coil 3V-A on the side of the neutral point, and a first W-phase lead wire 3W-IB connected to an end of a first W-phase coil 3W-A on the side of the neutral point.

A second three-phase coil has a star connection that connects, to form a second neutral point, a second U-phase lead wire 3U-IIB connected to an end of a second U-phase coil 3U-B on the side of the neutral point, a second V-phase lead wire 3V-IIB connected to an end of a second V-phase coil 3V-B on the side of the neutral point, and a second W-phase lead wire 3W-IIB connected to an end of a second W-phase coil 3W-B on the side of the neutral point.

A first U-phase lead wire 3U-IA is connected to an end of the first U-phase coil 3U-A on the side of the lead wire. A first V-phase lead wire 3V-IA is connected to an end of the first V-phase coil 3V-A on the side of the lead wire. A first W-phase lead wire 3W-IA is connected to an end of the first W-phase coil 3W-A on the side of the lead wire.

A second U-phase lead wire 3U-IIA is connected to an end of the second U-phase coil 3U-B on the side of the lead wire. A second V-phase lead wire 3V-IIA is connected to an end of the second V-phase coil 3V-B on the side of the lead wire. A second W-phase lead wire 3W-IIA is connected to an end of the second W-phase coil 3W-B on the side of the lead wire.

The stator coil 3 is formed from two parallel wye-connected circuits having a neutral point connection bus bar 101 connecting the first and second neutral points, a U-phase input/output terminal 103U connecting the first U-phase lead wire 3U-IA and the second U-phase lead wire 3U-IIA, a V-phase input/output terminal 103V connecting the first V-phase lead wire 3V-IA and the second V-phase lead wire 3V-IIA, and a W-phase input/output terminal 103W connecting the first W-phase lead wire 3W-IA and the second W-phase lead wire 3W-IIA.

Note that the input/output terminal 103 mentioned earlier with reference to Fig. 1 represents any one of the U-phase input/output terminal 103U, the V-phase input/output terminal 103V, and the W-phase input/output terminal 103W.

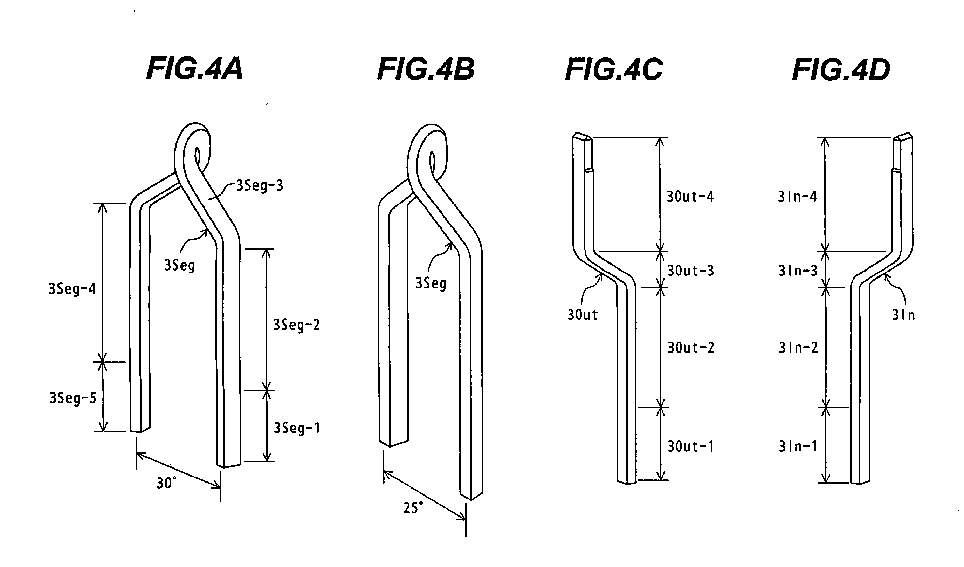

Referring to Figs. 4A through 4D, the arrangement of the segment coil and the lead wire constituting the stator coil 3 will be described below.

The segment coil and the lead wire are inserted, with respect to the stator core, from one axial end. Accordingly, in the first embodiment of the present invention, of the axial ends of the stator core, the side in which the segment coil and the lead wire are inserted is called the insertion side, while the opposite the insertion side is called the non-insertion side.

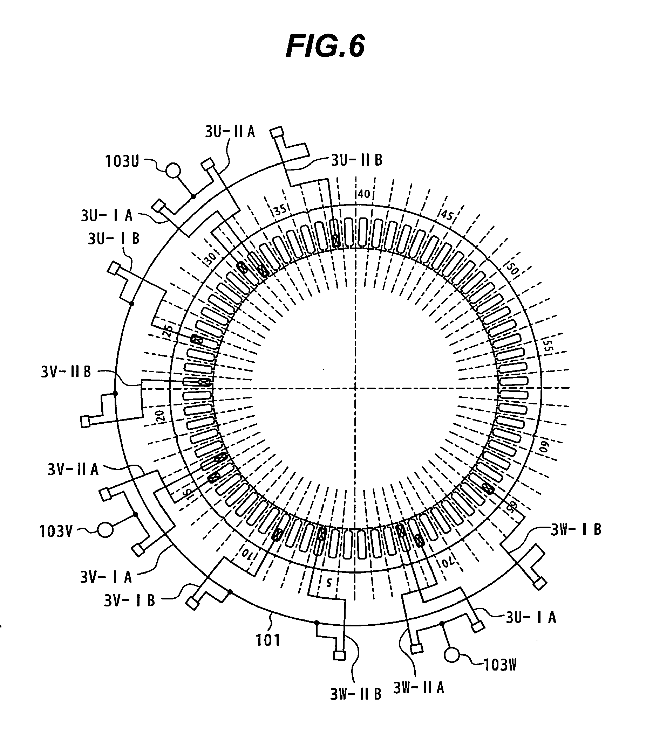

The lead wire may be inserted in an outer peripheral side (bottom side) of the slot in the stator core or an inner peripheral side (opening side) thereof. In the first embodiment of the present invention, therefore, those inserted in the outer peripheral side (bottom side) of the slot in the stator core are called an outer lead wire 30ut and those inserted in the inner peripheral side (opening side) of the slot in the stator core are called an inner lead wire 3In. In the example to be described later with reference to Fig. 6, the outer lead wire 30ut is used for the first U-phase lead wire 3U-IB, the first V-phase lead wire 3V-IB, the first W-phase lead wire 3W-IB, the second U-phase lead wire 3U-IIA, the second V-phase lead wire 3V-IIA, and the second W-phase lead wire 3W-IIA; the inner lead wire 3In is used for the second U-phase lead wire 3U-IIB, the second V-phase lead wire 3V-IIB, the second W-phase lead wire 3W-IIB, the first U-phase lead wire 3U-IA, the first V-phase lead wire 3V-IA, and the first W-phase lead wire 3W-IA.

The segment coil or the lead wire is, for instance, a copper wire having a 5-mm-wide and 2-mm-thick rectangular axial cross section. A flat wire with an enamel insulation jacket applied to the outside thereof is formed into a predetermined shape to serve as the segment coil or the lead wire.

Fig. 4A shows a first segment coil 3Seg.

The first segment coil 3Seg is a U-shaped or V-shaped formed conductor, including protruding straight portions 3Seg-1 and 3Seg-5, straight portions 3Seg-2 and 3Seg-4, and a bent portion 3Seg-3. The first segment coil 3Seg is formed as follows. Specifically, one straight flat wire is bent at its center; the two straight portions obtained through the bending are subjected to a further bending operation for making the two apart from each other, such that the same spacing as the pitch of the slot in the stator core, apart from each other corresponding to a rotating magnetic pole pitch, is formed between the two straight portions and such that a step corresponding to the depth of the slot in the stator core is formed between the two straight portions.

The protruding straight portions 3Seg-1 and 3Seg-5 protrude from the non-insertion side of the slot in the stator core when the first segment coil 3Seg is inserted from the insertion side of the slot in the stator core. The straight portions 3Seg-2 and 3Seg-4 are accommodated inside the slot in the stator core. The bent portion 3Seg-3 extends obliquely, in the insertion side, from a first slot of spaced slots toward a second one so as to leave the stator core; after being changed its direction midway, the bent portion 3Seg-3 extends obliquely toward the second slot of the spaced slots so as to come closer to the stator core (i.e. straddles over several slots spaced apart from each other). The bent portion 3Seg-3 forms one coil end of the stator coil.

The distance (spacing) between the straight portion 3Seg-2 and the straight portion 3Seg-4 is equivalent to six slots (30 degrees (mechanical angle)). Specifically, in accordance with the first embodiment of the present invention, there are 12 rotating magnetic poles and 72 stationary magnetic poles, so that the slot pitch of the stator core corresponding to the rotating magnetic pole pitch is six. Consequently, the first segment coil 3Seg straddles over five slots to be inserted into two spaced slots.

Fig. 4B shows a second segment coil 3Seg.

The second segment coil 3Seg has the same basic construction as the first segment coil 3Seg shown in Fig. 4A, except that the distance (spacing) between the two straight portions differs from that in the first segment coil 3Seg. The second segment coil 3Seg has a distance (spacing) between the two straight portions of five-slot pitch (25 degrees (mechanical angle)), one slot less than in the first segment coil 3Seg.

Fig. 4C shows the outer lead wire 30ut.

The outer lead wire 30ut is a cranked formed conductor (one piece of formed conductor obtained when a U-shaped or V-shaped formed conductor is separated at the center of the bent portion), including a protruding straight portion 30ut-1, a straight portion 30ut-2, a bent portion 30ut-3, and a protruding straight portion 30ut-4. The outer lead wire 30ut is formed as follows. Specifically, one straight flat wire is bent at two positions between its both ends such that a positional deviation is formed corresponding to half the pitch of the slot in the stator core, the pitch being apart from each other corresponding to a rotating magnetic pole pitch, and such that a step corresponding to the depth of the slot in the stator core is formed.

The straight portion 3Out-2 is accommodated inside the slot in the stator core. The protruding straight portion 3Out-1 protrudes from the non-insertion side of the slot in the stator core when the outer lead wire 3Out is inserted from the insertion side of the slot in the stator core. The bent portion 3Out-3 extends obliquely from the slot in the stator core so as to be away from the stator core in the insertion side. The protruding straight portion 3Out-4 is withdrawn so as to extend linearly in the direction of being further away from the stator core than an axial endmost part of the coil end formed by the bent portion 3Seg-3 of the segment coil 3Seg and substantially in parallel with respect to the axis of rotation. As a result, the protruding straight portion 3Out-4 of the outer lead wire 3Out is not to be routed around above the end coil on the insertion side.

Fig. 4D shows the inner lead wire 3In.

The inner lead wire 3In is a cranked formed conductor bent in a direction opposite the bending direction of the outer lead wire 3Out shown in Fig. 4C (the other piece of formed conductor obtained when a U-shaped or V-shaped formed conductor is separated at the center of the bent portion). The inner lead wire 3In includes a protruding straight portion 3In-1, a straight portion 3In-2, a bent portion 3In-3, and a protruding straight portion 3In-4.

Note that the protruding straight portion 3In-1, the straight portion 3In-2, and the protruding straight portion 3In-4 are identical to the protruding straight portion 3Out-1, the straight portion 3Out-2, and the protruding straight portion 3Out-4, each having the same corresponding dimensions and shape. The bent portion 3In-3 is identical in dimensions to the bent portion 3Out-3, but bent in the opposite direction from the bent portion 3Out-3. Specifically, the protruding straight portion 3Out-4 of the outer lead wire 3Out inserted in the outer peripheral side (bottom side) of the slot is disposed through the bend of the bent portion 30ut-3 at a diametric position corresponding to the inner peripheral side (opening side) of the slot; on the other hand, the protruding straight portion 3In-4 of the inner lead wire 3In inserted in the peripheral side having no slots (opening side) is disposed through the bend of the bent portion 3In-3 at a diametric position corresponding to the outer peripheral side (bottom side) of the slot. As a result, the outer lead wire 3Out and the inner lead wire 3In are similar in shape, but deformed.

A known technique to build a stator coil of the three-phase star connection using a flat wire follows these steps, as disclosed, for example, in JP-A-2002-354736 (hereinafter referred to as "known art example"). Specifically, a segment coil formed into a U- or V-shape is inserted in a plurality of slots in the stator core at a predetermined slot pitch. The portions of the protruding straight portions protruding from the non-insertion side of the stator core, from which the enamel insulation jackets are removed, are joined together to form each phase coil. Then, the lead wires on both ends of each phase coil for forming a start and an end of winding are formed into any shape so as to be routed around over the U- or V-shaped bent portion of the segment coil. The lead wires are then electrically connected to the lead wires or the input/output terminals of other phase coils.

To form each phase of the three-phase wye-connected stator coil from a single phase coil, a total of six lead wires are required, including two each (the start and the end of winding) required for each phase. The lead wire corresponding to the end of winding of each phase coil is routed over the bent portion of the U- or V-shaped segment coil so as to be joined at one place to form a neutral point of the star connection.

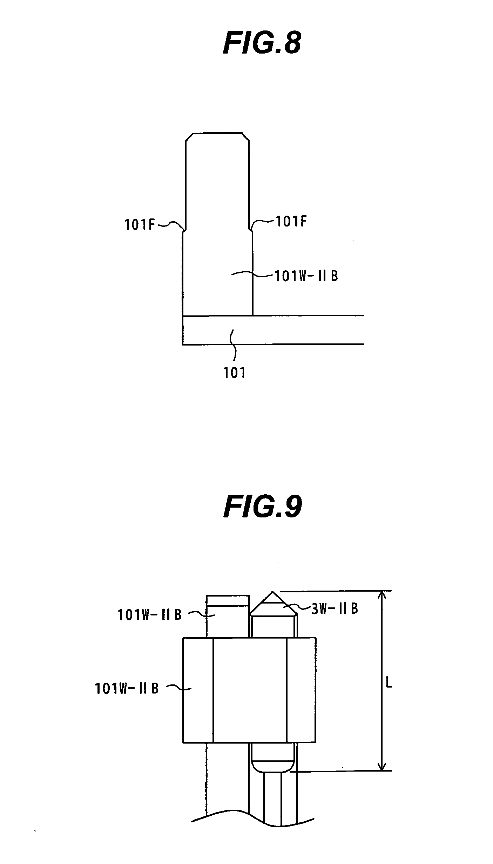

When configuring, as in the known art example, each phase of the three-phase wye-connected stator coil through series connection of the two each phase coils, the lead wires and the connection positions of neutral points are as detailed below. Specifically, a total of 12 lead wires are required to cover, as shown in Fig. 3 of the known art example (JP-A-2002-354736), lead wires Oa', Ob', and Oc' (one each, three in total), phase cross-over portions 801-d, 80b-e, and 80c-f (two each, six in total), and neutral point wire connections 81 (three in total). For the connection positions of neutral points, there is only one of a neutral point N as shown in Fig. 3 of the known art example, but phase cross-over portions at three places are required. As a result, the phase cross-over portions 801-d, 80b-e, and 80c-f and the neutral point wire connection 81 are routed above the U-shaped coil of each phase (segments 45, 46 shown in Fig. 8 of the known art example) at the axial end of the stator as shown in Fig. 2 of the known art example.

When configuring each phase of the three-phase wye-connected stator coil through parallel connection of the two each phase coils, a total of 12 lead wires are necessary as in the known art example. In addition, when configuring each phase of the three-phase wye-connected stator coil through parallel connection of the two each phase coils, two connection positions of neutral points are necessary, though no phase jumpers are required unlike the known art example. As a result, the neutral point wire connection is routed above the U-shaped coil of each phase at the axial end of the stator.

As described above, in the known art, it is necessary to route each lead wire above the bent portion of the U- or V-shaped segment coil and, additionally, to extend the lead wire up to the connection position at which the lead wire is connected to another lead wire or an input/output terminal. This means that each lead wire has its own shape and length. Accordingly, the known art requires deformed lines of a number of kinds. As noted earlier, to configure each phase of the three-phase wye-connected stator coil through parallel connection of the two each phase coils, lead wires of a total of 12 different lengths and shapes are required. When U- or V-shaped segment coils of two different shapes are added to the foregoing, the known art needs deformed lines of 14 different kinds to configure the stator coil. It has therefore not been, by any means, easy to manufacture or control stator coils in the known art.

In the first embodiment of the present invention, on the other hand, the stator coil 3 can be configured using the U- or V-shaped segment coils 3Seg of two different shapes and the lead wires of two different shapes (the outer lead wire 3Out and the inner lead wire 3In), a total of four kinds of deformed lines. As compared with the known art, therefore, the stator coil 3 can be manufactured and controlled more easily. Configuring the stator coil 3 with the deformed lines of four different types is achieved by making wiring connections for the stator coil 3 using the neutral conductor connection device 100 and the input/output terminal 103.

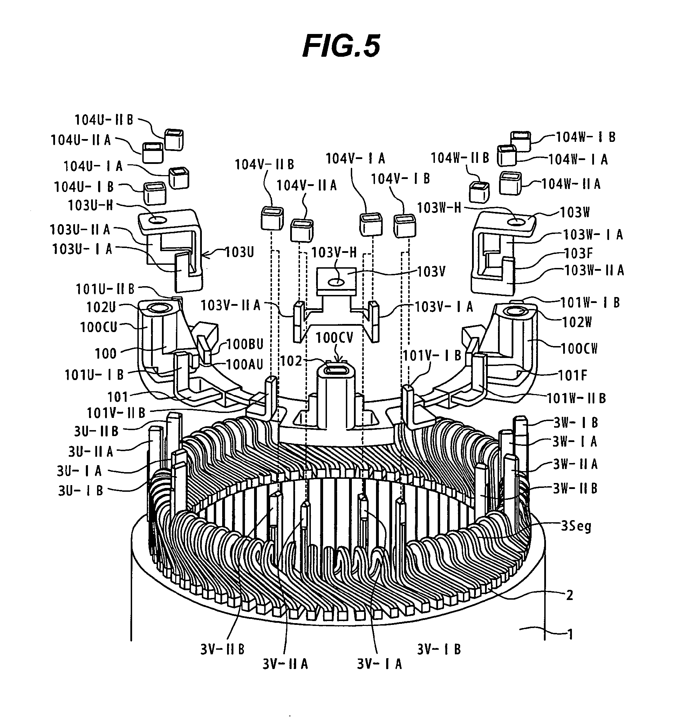

Referring next to Figs. 5 and 6, arrangements for insertion of the segment coils and the lead wires constituting the stator coil 3 relative to the slots in the stator core of the stator 1, for wire connection of the segment coils and the lead wires on the non-insertion side, and for wire connection of the neutral conductor connection device 100 and the input/output terminal 103 will be described below.

Fig. 5 shows the arrangements for wire connection made by the neutral conductor connection device 100 and the input/output terminal 103 of the lead wires of the stator coil 3 at the insertion side end of the stator core of the stator 1. Fig. 6 shows the wire connection of the lead wires of the stator coil 3 at the insertion side end of the stator core of the stator 1.

First of all, the arrangements for insertion of the segment coils and the lead wires constituting the stator coil 3 relative to the slots in the stator core of the stator 1 and for wire connection of the segment coils and the lead wires on the non-insertion side will be described below.

Referring to Fig. 5, the plurality of segment coil 3Seg formed as described earlier is inserted with the insulation paper 2 in the plurality of slots formed in the stator core of the stator 1 at the above-referenced slot pitch. For a three-phase, two-parallel star connection having 72 slots, 11 segment coils 3Seg are used for each phase coil of each phase, which amounts to 66 in total.

In addition, 12 lead wires 3U-IA to 3W-IIB are inserted, respectively, with the insulation paper 2 in the plurality of slots formed in the stator core of the stator 1. The 12 lead wires 3U-IA to 3W-IIB withdrawn on the insertion side end of the stator core of the stator 1 are connected as shown in Fig. 6.

Referring to Fig. 6, numerals marked on the outer periphery of the stator core of the stator 1 identify corresponding slots. In the first embodiment of the present invention, there are 72 slots, each being numbered from 1 to 72. In the description that follows, the first slot, the second slot, .. and the 72nd slot are referred to as slot 1, slot 2, .. and slot 72, respectively. The spacing between two adjacent slots (slot pitch) is 5 degrees (mechanical angle).

In Fig. 6, dots and X's in the slots indicate the direction of current flowing through the flat wire conductor in the slot when a positive current is passed from the lead wires 3U-IA, 3U-IIA, 3V-IA, 3V-IIA, 3W-IA, and 3W-IIA with the neutral conductor not connected. In addition, the lead wires 3U-IA and 3U-IIA, the lead wires 3V-IA and 3V-IIA, and the lead wires 3W-IA and 3W-IIA are each shown to be circumferentially crossing. In reality, however, the two elements of each pair can never interfere with each other because of their insertion positions relative to the slot being deviated diametrically.

Each phase coil of each phase will be described below.

Arrangements for insertion of the segment coil 3Seg, the first U-phase lead wire 3U-IB, and the first U-phase lead wire 3U-IA constituting the first U-phase coil 3U-A shown in Fig. 3, and for wire connection in their non-insertion side will be first described.

Suppose that the first U-phase lead wire 3U-IA is inserted, for example, in the inner peripheral side (opening side) of slot 32. Then, one of the straight portions of the first one of the first segment coil 3Seg is inserted in the outer peripheral side (bottom side) of slot 38 which is a pitch of six slots (30 degrees in mechanical angle) away from slot 32. The other of the straight portions straddles over slots 39 to 43 to be inserted in the inner peripheral side (opening side) of slot 44 which is a pitch of six slots away from slot 38. Similarly, the second through fifth ones of the first segment coil 3Seg are inserted in corresponding pairs of slots, each slot of the pair being away from each other. The following detail the relations of the insertion arrangement.

Second one .. Between the outer peripheral side of slot 50 and the inner peripheral side of slot 56

Third one .. Between the outer peripheral side of slot 62 and the inner peripheral side of slot 68

Fourth one .. Between the outer peripheral side of slot 2 and the inner peripheral side of slot 8

Fifth one .. Between the outer peripheral side of slot. 14 and the inner peripheral side of slot 20

When the first through fifth ones of the first segment coil 3Seg are inserted in slots, the second segment coil 3Seg is to be used to shift slots by one slot. For the second segment coil 3Seg, one of the straight portions is inserted in the outer peripheral side (bottom side) of slot 26 which is a pitch of six slots (30 degrees in mechanical angle) away from slot 20. The other of the straight portions straddles over slots 27 to 30 to be inserted in the inner peripheral side (opening side) of slot 31 which is a pitch of five slots (25 degrees in mechanical angle) away from slot 26.

After the second segment coil 3Seg is inserted, the sixth through tenth ones of the first segment coil 3Seg are inserted in corresponding pairs of slots, each slot of the pair being away from each other. The following detail the relations of the insertion arrangement.

Sixth one .. Between the outer peripheral side of slot 37 and the inner peripheral side of slot 43

Seventh one .. Between the outer peripheral side of slot 49 and the inner peripheral side of slot 55

Eighth one .. Between the outer peripheral side of slot 61 and the inner peripheral side of slot 67

Ninth one .. Between the outer peripheral side of slot 1 and the inner peripheral side of slot 7

Tenth one .. Between the outer peripheral side of slot 13 and the inner peripheral side of slot 19

As the last step, the first U-phase lead wire 3U-IB is inserted in the outer peripheral side of slot 25 which is a pitch of six slots away from slot 19.

The protruding straight portion 3In-1 of the first U-phase lead wire 3U-IA, the protruding straight portion 3Out-1 of the first U-phase lead wire 3U-IB, and the protruding straight portions 3Seg-1 and 3Seg-5 of each segment coil 3Seg are folded, at the non-insertion side end of the stator core of the stator 1, relatively circumferentially up to positions, at which faces thereof perpendicular to a radial direction can be joined together in the order of insertion of the coils, and joined together with a clad material. For example, the protruding straight portion 3In-1 of the first U-phase lead wire 3U-IA inserted in slot 32 and the protruding straight portion 3Seg-1 of the first one of the first segment coil 3Seg inserted in slot 38 are first folded and then joined together. Similarly, the protruding straight portion 3Seg-5 of the first one of the first segment coil 3Seg inserted in slot 44 and the protruding straight portion 3Seg-1 of the second one of the first segment coil 3Seg inserted in slot 50 are folded and then joined together. In this case, the protruding straight portion 3In-1 of the first U-phase lead wire 3U-IA and the protruding straight portion 3Out-1 of the first U-phase lead wire 3U-IB are folded in a direction opposite the bending direction of the bent portions 3In-3, 3Out-3 relative to the straight portion. The protruding straight portions 3Seg-1 and 3Seg-5 of the segment coils 3Seg are also folded in a direction opposite the bending direction of the bent portion 3Seg-3 relative to the straight portion (opposite the direction in which each segment coil 3Seg straddles). The bending and joining of the protruding straight portions in the non-insertion side is as shown in, for example, the joining portion 43 of Fig. 8 of the known art example.

The first embodiment of the present invention is described as an exemplary case, in which the clad material is used for joining. Other joining method may, nonetheless, be used, including brazing, soldering, and welding.

As described above, the first U-phase coil 3U-A shown in Fig. 3 can be formed by connecting, at the non-insertion side end of the stator core of the stator 1, each protruding straight portion in the following slot order so that a series connection can be made between the first U-phase lead wire 3U-IA and the first U-phase lead wire 3U-IB via 11 segment coils 3Seg.

Slot 32 -> Slot 38 -> Slot 44 -> Slot 50 -> Slot 56 -> Slot 62 -> Slot 68 -> Slot 2 -> Slot 8 -> Slot 14 -> Slot 20 -> Slot 26 -> Slot 31 -> Slot 37 -> Slot 43 -> Slot 49 -> Slot 55 -> Slot 61 -> Slot 67 -> Slot 1 -> Slot 7 -> Slot 13 -> Slot 19 -> Slot 25

Arrangements for insertion of the segment coil 3Seg, the second U-phase lead wire 3U-IIB, and the second U-phase lead wire 3U-IIA constituting the second U-phase coil 3U-B shown in Fig. 3, and for wire connection in their non-insertion side will be first described.

Suppose that the second U-phase lead wire 3U-IIA is inserted, for example, in the outer peripheral side (bottom side) of slot 31. Then, one of the straight portions of the first one of the first segment coil 3Seg is inserted in the inner peripheral side (opening side) of slot 25 which is a pitch of six slots (30 degrees in mechanical angle) away from slot 31. The other of the straight portions straddles over slots 30 to 20 to be inserted in the outer peripheral side (bottom side) of slot 19 which is a pitch of six slots away from slot 25. Similarly, the second through fifth ones of the first segment coil 3Seg are inserted in corresponding pairs of slots, each slot of the pair being away from each other. The following detail the relations of the insertion arrangement.

Second one .. Between the inner peripheral side of slot 13 and the outer peripheral side of slot 7

Third one .. Between the inner peripheral side of slot 1 and the outer peripheral side of slot 67

Fourth one .. Between the inner peripheral side of slot 61 and the outer peripheral side of slot 55

Fifth one .. Between the inner peripheral side of slot 49 and the outer peripheral side of slot 43

Note that, for the second U-phase coil 3U-B, the insertion order of coil relative to the slots is reversed from that for the first U-phase coil 3U-A. Specifically, the insertion order for the first U-phase coil 3U-A is clockwise, while that for the second U-phase coil 3U-B is counterclockwise.

When the first through fifth ones of the first segment coil 3Seg are inserted in slots, the second segment coil 3Seg is to be used to shift slots by one slot. For the second segment coil 3Seg, one of the straight portions is inserted in the inner peripheral side (opening side) of slot 37 which is a pitch of six slots (30 degrees in mechanical angle) away from slot 43. The other of the straight portions straddles over slots 36 to 31 to be inserted in the outer peripheral side (bottom side) of slot 32 which is a pitch of five slots (25 degrees in mechanical angle) away from slot 37.

After the second segment coil 3Seg is inserted, the sixth through tenth ones of the first segment coil 3Seg are inserted in corresponding pairs of slots, each slot of the pair being away from each other. The following detail the relations of the insertion arrangement.

Sixth one .. Between the inner peripheral side of slot 26 and the outer peripheral side of slot 20

Seventh one .. Between the inner peripheral side of slot 14 and the outer peripheral side of slot 8

Eighth one .. Between the inner peripheral side of slot 2 and the outer peripheral side of slot 68

Ninth one .. Between the inner peripheral side of slot 62 and the outer peripheral side of slot 56

Tenth one .. Between the inner peripheral side of slot 50 and the outer peripheral side of slot 44

As the last step, the second U-phase lead wire 3U-IIB is inserted in the inner peripheral side of slot 38 which is a pitch of six slots away from slot 44.

The protruding straight portion 3In-1 of the second U-phase lead wire 3U-IIB, the protruding straight portion 3Out-1 of the second U-phase lead wire 3U-IIA, and the protruding straight portions 3Seg-1 and 3Seg-5 of each segment coil 3Seg are folded, at the non-insertion side end of the stator core of the stator 1, relatively circumferentially up to positions, at which faces thereof perpendicular to a radial direction can be joined together in the order of insertion of the coils, and joined together with a clad material. For example, the protruding straight portion 3Out-1 of the second U-phase lead wire 3U-IIA inserted in slot 31 and the protruding straight portion 3Seg-5 of the first one of the first segment coil 3Seg inserted in slot 25 are first folded and then joined together. Similarly, the protruding straight portion 3Seg-1 of the first one of the first segment coil 3Seg inserted in slot 19 and the protruding straight portion 3Seg-5 of the second one of the first segment coil 3Seg inserted in slot 13 are folded and then joined together. In this case, the protruding straight portion 3In-1 of the second U-phase lead wire 3U-IIB, the protruding straight portion 3Out-1 of the second U-phase lead wire 3U-IIA, and the protruding straight portions 3Seg-1 and 3Seg-5 of each segment coil 3Seg are folded in a direction opposite the bending direction of each bent portion relative to the straight portion in the same manner as in the first U-phase coil 3U-A.

As described above, the second U-phase coil 3U-B shown in Fig. 3 can be formed by connecting, at the non-insertion side end of the stator core of the stator 1, each protruding straight portion in the following slot order so that a series connection can be made between the second U-phase lead wire 3U-IIA and the second U-phase lead wire 3U-IIB via 11 segment coils 3Seg.

Slot 31 -> Slot 25 -> Slot 19 -> Slot 13 -> Slot 7 -> Slot 1 -> Slot 67 -> Slot 61 -> Slot 55 -> Slot 49 -> Slot 43 -> Slot 37 -> Slot 32 -> Slot 26 -> Slot 20 -> Slot 14 -> Slot 8 -> Slot 2 -> Slot 68 -> Slot 62 -> Slot 56 -> Slot 50 -> Slot 44 -> Slot 38

Similarly, the first V-phase coil 3V-A is formed by a series connection established between the first V-phase lead wire 3V-IA inserted in the inner peripheral side (opening side) of slot 16 and the first V-phase lead wire 3V-IB inserted in the outer peripheral side (bottom side) of slot 9 via 11 segment coils 3Seg. The second V-phase coil 3V-B is formed by a series connection established between the second V-phase lead wire 3V-IIA inserted in the outer peripheral side (bottom side) of slot 15 and the second V-phase lead wire 3V-IIB inserted in the inner peripheral side (opening side) of slot 15 via 11 segment coils 3Seg.

Similarly, the first W-phase coil 3W-A is formed by a series connection established between the first W-phase lead wire 3W-IA inserted in the inner peripheral side (opening side) of slot 72 and the first W-phase lead wire 3W-IB inserted in the outer peripheral side (bottom side) of slot 65 via 11 segment coils 3Seg. The second W-phase coil 3W-B is formed by a series connection established between the second W-phase lead wire 3W-IIA inserted in the outer peripheral side (bottom side) of slot 71 and the second W-phase lead wire 3W-IIB inserted in the inner peripheral side (opening side) of slot 6 via 11 segment coils 3Seg.

In accordance with the first embodiment of the present invention, when configuring a three-phase, two-parallel, wye-connected stator coil 3 using the segment coil, the lead wire of each phase can be withdrawn for each phase without allowing the same to overlap with another lead wire of another phase. According to the first embodiment of the present invention, therefore, the lead wires of the same phase can be joined together without allowing the lead wires to overlap the lead wire of another phase. This prevents the enamel insulation jacket from being damaged or worn, which would otherwise occur as the lead wires overlap each other. A stator coil 3 of high reliability can therefore be provided.

Arrangements for the neutral conductor connection device 100 and for wire connection of the lead wires will be described below.

Referring to Fig. 5, the neutral conductor connection device 100 is disposed above the U- or V-bent portion of the segment coil 3Seg (above an axial leading end of the stator coil 3 at the insertion side coil end). The neutral conductor connection device 100 wires the lead wires on the neutral point side and connects the lead wires on the input/output side with the input/output terminal 103. The neutral conductor connection device 100 is arcuately formed and includes the neutral point connection bus bar 101 formed from a single conductor plate and resin moldings 100CU to 100CW (terminal blocks) packing part of the neutral point connection bus bar 101 and integrally formed with the neutral point connection bus bar 101 using an insulated resin.

The neutral conductor connection device 100 includes an air gap formed between a first end and a second end thereof in the circumferential direction. In accordance with the first embodiment of the present invention, the brush 8 and the brush holder are disposed at the air gap as shown in Fig. 2, so that the axial position of the neutral conductor connection device 100 and the axial position of the brush 8 and the brush holder overlap each other. According to the first embodiment of the present invention, therefore, the axial length of the rotating electric machine can be reduced.

The neutral point connection bus bar 101 is formed from a flat conductor having the same axial cross-sectional dimensions as the segment coil 3Seg (e.g., width 5 mm and thickness 2 mm). The neutral point connection bus bar 101 includes a main conductor extending arcuately and connections 101U-IB to 101W-IIB disposed dispersedly relative to the main conductor and branching from an outer peripheral edge of the main conductor.

The connections 101U-IB to 101W-IIB are connected with corresponding neutral point side lead wires. The connections 101U-IB to 101W-IIB and the neutral point side lead wires have the following correspondence.
Connection 101U-IB -> First U-phase lead wire 3U-IB
Connection 101U-IIB -> Second U-phase lead wire 3U-IIB
Connection 101V-IB -> First V-phase lead wire 3V-IB
Connection 101V-IIB -> Second V-phase lead wire 3V-IIB
Connection 101W-IB -> First W-phase lead wire 3W-IB
Connection 101W-IIB -> Second W-phase lead wire 3W-IIB

As a result, the neutral point connection bus bar 101 electrically connects the first U-phase lead wire 3U-IB, the first V-phase lead wire 3V-IB, and the first W-phase lead wire 3W-IB to form the first neutral point, thereby constituting the wye-connected first three-phase coil. The neutral point connection bus bar 101 further electrically connects the second U-phase lead wire 3U-IIB, the second V-phase lead wire 3V-IIB, and the second W-phase lead wire 3W-IIB to form the second neutral point, thereby constituting the wye-connected second three-phase coil. Further, the neutral point connection bus bar 101 electrically connects the first neutral point of the first three-phase coil with the second neutral point of the second three-phase coil. As a result, the neutral point connection bus bar 101 constitutes the neutral point side of the wye-connected, three-phase, two-parallel stator coil 3.

On the same plane as that which is perpendicular to the axial direction and on which the neutral point connection bus bar 101 is disposed, each of the connections 101U-IB to 101W-IIB extends diametrically outwardly (in a centrifugal direction) from the outer peripheral edge of the neutral point connection bus bar 101 and then bends at right angles (to form an L-shape) relative to the peripheral direction. Then, at a position at which the conductor face abuts on (tightly contacts) the conductor face of the corresponding neutral point side lead wire, each of the connections 101U-IB to 101W-IIB bends at right angles (to form another L-shape) relative to the axial direction and extends substantially in parallel with the corresponding neutral point side lead wire.

When each of the connections 101U-IB to 101W-IIB bends in the peripheral direction, the connection bends toward a corresponding one of the resin moldings 100CU to 100CW of the corresponding phase.

After the neutral conductor connection device 100 is disposed above the axial leading end of the stator coil 3 at the insertion side coil end so that the connections 101U-IB to 101W-IIB abut on (tightly contact) the corresponding neutral point side lead wires, a corresponding one of clad materials 104U-IB to 104W-IIB is mounted at the leading end of each pair of the connections 101U-IB to 101W-IIB and the corresponding neutral point side lead wires. This allows the connections 101U-IB to 101W-IIB and the corresponding neutral point side lead wires to be wrapped and held, and thus temporarily secured in position, by the corresponding clad materials 104U-IB to 104W-IIB. Each of the clad materials 104U-IB to 104W-IIB is a rectangular wrapping holder and is mounted such that the leading end of the pair of the connections 101U-IB to 101W-IIB and the corresponding neutral point side lead wires protrudes. Thereafter, an electrode rod each is applied from the outside diameter side and the inside diameter side of the stator core of the stator 1 to each temporarily fixed portion sequentially or wholly. As the electrode rod is energized, each pair of the connections 101U-IB to 101W-IIB and the corresponding neutral point side lead wires is welded together in a one-to-one relation. The pair of the connections 101U-IB to 101W-IIB and the corresponding neutral point side lead wires and the clad materials 104U-IB to 104W-IIB have the following correspondence.
Connection 101U-IB -> First U-phase lead wire 3U-IB -> Clad material 104U-IB
Connection 101U-IIB -> Second U-phase lead wire 3U-IIB -> Clad material 104U-IIB
Connection 101V-IB -> First V-phase lead wire 3V-IB -> Clad material 104V-IB
Connection 101V-IIB -> Second V-phase lead wire 3V-IIB -> Clad material 104V-IIB
Connection 101W-IB -> First W-phase lead wire 3W-IB -> Clad material 104W-IB
Connection 101W-IIB -> Second W-phase lead wire 3W-IIB -> Clad material 104W-IIB

The U-phase input/output terminal 103U is deployed above the resin molding 100CU. The V-phase input/output terminal 103V is deployed above the resin molding 100CV. The W-phase input/output terminal 103W is deployed above the resin molding 100CW. The input/output terminals 103U to 103W are deployed relative to the resin moldings 100CU to 100CW after the connections 101U-IB to 101W-IIB and the corresponding neutral point side lead wires are joined together. The input/output terminal 103 includes a terminal and a joint 103U-IA to 103W-IIA to be joined to the corresponding lead wire on the input/output side.

The joints 103U-IA to 103W-IIA and the corresponding input/output side lead wires have the following correspondence.
Joint 103U-IA -> First U-phase lead wire 3U-IA
Joint 103U-IIA -> Second U-phase lead wire 3U-IIA
Joint 103V-IA -> First V-phase lead wire 3V-IA
Joint 103V-IIA -> Second V-phase lead wire 3V-IIA
Joint 103W-IA -> First W-phase lead wire 3W-IA
Joint 103W-IIA -> Second W-phase lead wire 3W-IIA

As a result, the U-phase input/output terminal 103U electrically connects the first U-phase lead wire 3U-IA and the second U-phase lead wire 3U-IIA, the V-phase input/output terminal 103V electrically connects the first V-phase lead wire 3V-IA and the second V-phase lead wire 3V-IIA, and the W-phase input/output terminal 103W electrically connects the first W-phase lead wire 3W-IA and the second W-phase lead wire 3W-IIA. This configures the wye-connected, three-phase, two-parallel input/output side of the stator coil 3, so that the wye-connected, three-phase, two-parallel stator coil 3 is formed.

The terminal of each of the input/output terminals 103U to 103W is an L-shaped conductor (a conductor portion of a flat conductor perpendicular to the axial direction extending orthogonally relative to a flat conductor perpendicular to the diametric direction) wider in width than the joints 103U-IA to 103W-IIA. The terminal is formed from a plate-like conductor having the same wall thickness (e.g. 2 mm) as that of the neutral point connection bus bar 101 and the segment coil 3Seg. The diametrically perpendicular flat conductors of the input/output terminals 103U to 103W include holes 103U-H, 103V-H, and 103W-H formed, respectively, therein.

Each of the joints 103U-IA to 103W-IIA extends, in a plane perpendicular to the axial direction, in a direction away from the resin molding of the corresponding phase circumferentially from both circumferential ends at a leading end side (the side opposite the side of the flat portion perpendicular to the axial direction) of the flat portion of the terminal perpendicular to the diametric direction. The joint then bends at right angles (to form an L-shape) and extends outwardly (in the centrifugal direction) diametrically. Then, at a position at which the conductor face abuts on (tightly contacts) the conductor face of the corresponding input/output side lead wire, each of the connections 101U-IB to 101W-IIB bends at right angles (to form another L-shape) relative to the axial direction and extends substantially in parallel with the corresponding input/output side lead wire.

Nuts 102U, 102V, 102W are embedded in the resin moldings 100CU to 100CW, respectively. The nuts 102U, 102V, 102W are disposed so as to oppose the holes 103U-H, 103V-H, 103W-H formed in the flat conductors of the terminals extending perpendicularly to the axis direction. The bolt 32 shown in Fig. 1 penetrates through the holes 103U-H, 103V-H, 103W-H and threadably screwed in the nuts 102U, 102V, 102W. This connects the intermediate bus bar 15 shown in Figs. 1 and 2 to each of the input/output terminals 103U, 103V, 103W, so that an electric connection is established between the rotating electric machine and the inverter unit.

After the input/output terminals 103U to 103W are disposed at the corresponding resin moldings so that the joints 103U-IA to 103W-IIA abut on (tightly contact) the corresponding input/output side lead wires, a corresponding one of clad materials 104U-IA to 104W-IIA is mounted at the leading end of each pair of the joints 103U-IA to 103W-IIA and the corresponding input/output side lead wires in the same manner as on the neutral point side. This allows the joints 103U-IA to 103W-IIA and the corresponding input/output side lead wires to be wrapped and held, and thus temporarily secured in position, by the corresponding clad materials 104U-IA to 104W-IIA. Each of the clad materials 104U-IA to 104W-IIA is a rectangular wrapping holder, as those for the neutral point side, and is mounted such that the leading end of the pair of the joints 103U-IA to 103W-IIA and the corresponding input/output side lead wires protrudes. Thereafter, an electrode rod each is applied from the outside diameter side and the inside diameter side of the stator core of the stator 1 to each temporarily fixed portion sequentially or wholly. As the electrode rod is energized, each pair of the joints 103U-IA to 103W-IIA and the corresponding input/output side lead wires is welded together in a one-to-one relation. The pair of the joints 103U-IA to 103W-IIA and the corresponding input/output side lead wires and the clad materials 104U-IA to 104W-IIA have the following correspondence.
Joint 103U-IA -> First U-phase lead wire 3U-IA -> Clad material 104U-IA
Joint 103U-IIA -> Second U-phase lead wire 3U-IIA -> Clad material 104U-IIA
Joint 103V-IA -> First V-phase lead wire 3V-IA -> Clad material 104V-IA
Joint 103V-IIA -> Second V-phase lead wire 3V-IIA -> Clad material 104V-IIA
Joint 103W-IA -> First W-phase lead wire 3W-IA -> Clad material 104W-IA
Joint 103W-IIA -> Second W-phase lead wire 3W-IIA -> Clad material 104W-IIA

Note that, in the rotating electric machine shown in Fig. 5, the input/output terminal 103 disposed at the neutral conductor connection device 100 has its face perpendicular to the diametric direction of the stator extended axially and bent in the diametric direction in midway in order to connect to the intermediate bus bar 15 on the side opposite the output shaft side. This is because the work to assemble the brush holder, rotation sensor, and the like is performed from the side of the opening OA shown in Fig. 5, in addition to the work to connect the bus bar from the side of the opening OA. Specifically, a plurality of work procedures is performed centrally from the opening OA for the improved work processes. Without these restrictions on the work process, however, it would become possible to bend diametrically the input/output terminal in midway point, to embed the nut to permit connection of the bus bar from the diametric direction of the stator, to press-fit the nut in the bus bar, or to directly screw or weld the bus bar.

In the first embodiment of the present invention, the wye-connected, three-phase, two-parallel stator coil 3 is used, so that there are two each lead wires on the neutral point side and the input/output side for each phase. The lead wire on the neutral point side and the input/output side is one each for each phase with a simple wye configuration, not a two-parallel one. In this case, the connections with the lead wires on the neutral point side of the neutral conductor connection device 100 are the connections 101U-IB, 101V-IB, and 101W-IB and the joints with the lead wires on the input/output side of the input/output terminal 103 are the joints 103U-IA, 103V-IA, and 103W-IA.

In accordance with the first embodiment of the present invention, a single lead wire is joined using a single connection member relative to a single connection or a single joint, instead of joining three lead wires into one. This achieves stable resistance at the connection or joint and simplifies the capacity and type of joining equipment.

In accordance with the first embodiment of the present invention, the neutral point connection bus bar 101 and the input/output terminal 103 are manufactured by bending the corresponding stocks blanked out from a sheet stock having a uniform thickness. Accordingly, the neutral point connection bus bar 101 and the input/output terminal 103 can be manufactured through the same press process and from the same material, which reduces material cost and types of press dies. Moreover, the neutral point connection bus bar 101 and the input/output terminal 103 are of the same wall thickness. This allows the connection conditions between the neutral point side lead wires and the neutral point connection bus bar 101 to be the same as those between the input/output side lead wires and the input/output terminal 103, which helps simplify a process of setting conditions during joining.

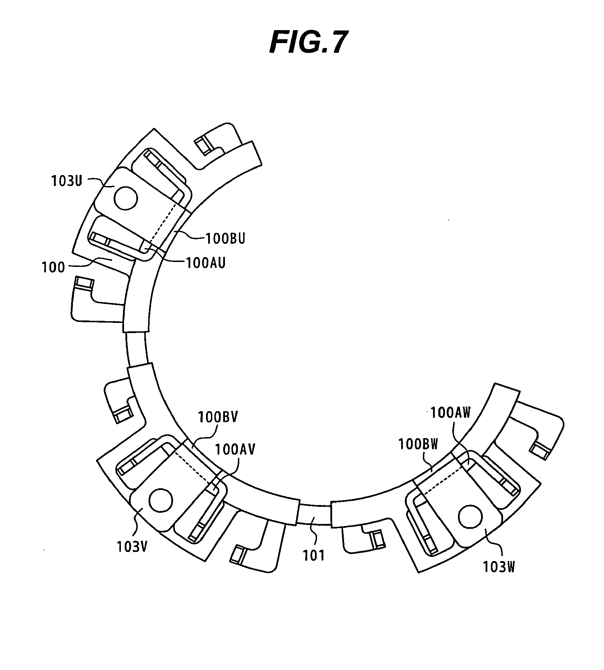

The positional relationship between the neutral conductor connection device 100 and the input/output terminal 103 will be described below with reference to Fig. 7.

Fig. 7 shows the positional relationship between the neutral conductor connection device 100 and the input/output terminal 103, as viewed from an axial end.

The resin molding 100CU includes a protrusion protruding in the axial direction and a molding extending circumferentially to mold the neutral point connection bus bar 101. The molding includes protrusions 100AU and 100BU formed thereon. The protrusions 100AU, 100BU axially protrude and are juxtaposed with a predetermined diametrical spacing therebetween. The distance between the opposing face of the protrusion 100AU and that of the protrusion 100BU is substantially equal to the wall thickness (e.g. 2 mm) of the U-phase input/output terminal 103U. The U-phase input/output terminal 103U is disposed between the protrusions 100AU and 100BU so as to be sandwiched therebetween. This allows the U-phase input/output terminal 103U to be positioned diametrically. The length of the protrusion 100AU is determined according to the L-shape on the terminal side of the joint of the U-phase input/output terminal 103U. Consequently, the U-phase input/output terminal 103U is automatically positioned circumferentially at the L-bent portion on the terminal side of the joint.

The resin moldings 100CV, 100CW are configured in the same manner as the resin molding 100CU, so that the corresponding V-phase input/output terminal 103V and W-phase input/output terminal 103W are positioned diametrically and circumferentially.

Referring next to Figs. 8 and 9, arrangements for joining the connections of the neutral conductor connection device 100 and the neutral point side lead wires will be described below.

Fig. 8 is an enlarged view showing the shape of the joint between the connection of the neutral conductor connection device 100 and the neutral point side lead wires. Fig. 9 is an enlarged view showing the condition of the joint between the connection of the neutral conductor connection device 100 and the neutral point side lead wires.

Referring to Fig. 8, the connection 101W-IIB of the neutral conductor connection device 100 includes steps 101F formed at ends thereof for positioning the clad material. Similarly, the connections 101U-IB, 101U-IIB, 101V-IB, 101V-IIB, and 101W-IB also include two steps 101F formed thereon.

The condition, in which the clad material is disposed on the pair of the lead wire and the connection of the neutral conductor connection device, will be described below.

The first embodiment of the present invention will be described as an exemplary case, in which the clad material 104W-IIB is disposed on the pair of the connection 101W-IIB and the second W-phase lead wire 3W-IIB. The description applies to any other case, in which any other clad material is disposed on a corresponding pair of any other lead wire and any other connection.

With the connection 101W-IIB and the second W-phase lead wire 3W-IIB correctly positioned so that a side face of the connection 101W-IIB abuts on a side face of the second W-phase lead wire 3W-IIB, the clad material 104W-IIB is inserted from the leading end of the pair of the two. Then, the clad material 104W-IIB stops at the position of the steps 101F.

Under the abovementioned condition, the leading end of the second W-phase lead wire 3W-IIB and that of the connection 101W-IIB protrude from the clad material 104W-IIB. The portion of the second W-phase lead wire 3W-IIB, from which the enamel insulation jacket is removed (the region indicated by an L in Fig. 9), reaches a point closer to the stator core of the stator 1 than the steps 101F.

The steps 101F ensure that the clad material 104W-IIB is disposed on the connection 101W-IIB. Accordingly, it is relatively easy to minimize variations in positioning the connection 101W-IIB and the clad material 104W-IIB; however, it is relatively difficult to set strictly the positions of the second W-phase lead wire 3W-IIB and the clad material 104W-IIB. If the position of the leading end of the second W-phase lead wire 3W-IIB is set to be the same as the position at which the clad material 104W-IIB is disposed, a joint area may become smaller depending on variations in the second W-phase lead wire 3W-IIB. If the position of the portion of the second W-phase lead wire 3W-IIB, from which the enamel insulation jacket is removed, is set to be the same as the position at which the clad material 104W-IIB is disposed, the joint area may again become smaller depending on variations in the second W-phase lead wire 3W-IIB. As a result, an intended joint area may not be achieved, resulting in an increased resistance or temperature of the stator coil 3.

In accordance with the first embodiment of the present invention, therefore, the leading end of the second W-phase lead wire 3W-IIB and that of the connection 101W-IIB protrude from the clad material 104W-IIB; further, the portion of the second W-phase lead wire 3W-IIB, from which the enamel insulation jacket is removed, is adapted to reach a point closer to the stator core of the stator 1 than the steps 101F. A stabilized joint area is thereby achieved.

Additionally, in accordance with the first embodiment of the present invention, the joint of the input/output terminal 103 includes, as shown in Fig. 5, a step 103F that is similar in nature to the steps 101F shown in Fig. 8. Further, the leading end of the input/output side lead wire and that of the joint of the input/output terminal 103 are adapted to protrude from the clad material. The portion of the input/output side lead wire, from which the enamel insulation jacket is removed, is adapted to reach a point closer to the stator core of the stator 1 than the step 103F.

In the first embodiment of the present invention, the enamel insulation jacket is removed from only two faces of the lead wire to be joined to the clad material. The enamel insulation jacket is not removed from the face of the lead wire in contact with the connection or the joint and another face on the backside of the foregoing contact face. To remove reliably the enamel insulation jacket from a flat wire by using a machine, it is necessary to remove the jacket to a width more than the actual thickness of the insulation film. If this removal process is performed on all four faces of a lead wire made of a flat wire, a small cross-sectional area results of the flat wire, which may lead to an increased resistance at the portion in question and an increased temperature. For this reason, in the first embodiment of the present invention, only two faces of the enamel insulation jacket are removed. If the cross-sectional area involved permits, the enamel insulation jacket may be removed from all four faces. The enamel insulation jacket may also be removed from all four faces, if any other method of removing the enamel insulation jacket ensures a desired value or more for the cross-sectional area.

The joints of the input/output terminal 103, the connections of the neutral point connection bus bar 101, and the input/output terminal 103 are grouped together for each phase of U, V, or W, those of each phase being separated from each other. The input/output terminal 103 and its joints are disposed circumferentially adjacently to each other. For a two-parallel wye configuration, the joints of the input/output terminal 103 are disposed on both circumferential sides of the input/output terminal 103 and the connections of the neutral point connection bus bar 101 are disposed on both circumferential sides of the joints of the input/output terminal 103. The joints of the input/output terminal 103 and the neutral point connection bus bar 101 have a height (height in the axial direction of the rotating electric machine) that differs between a first circumferential side and a second circumferential side of the input/output terminal 103. The positions of the joints of the input/output terminal 103 and the neutral point connection bus bar 101 in the circumferential direction differ between the first and the second circumferential side of the input/output terminal 103. The input/output terminal 103 is formed such that a terminal face thereof is perpendicular to the axial direction. The input/output terminal 103 is disposed such that the terminal face thereof has a leading end disposed inside of an outside diameter of the stator core of the stator 1.

A first portion, at which the joints of the input/output terminal 103, the connections of the neutral point connection bus bar 101, and the input/output terminal 103 are disposed, and a second portion, at which the neutral point connection bus bar 101 is disposed, are in diametric juxtaposition with each other in the insertion side of the stator core of the stator 1. At this time, the first portion is disposed on the outside diameter side, while the second portion is disposed on the inside diameter side. In addition, the first portion is disposed so as to be located above the coil end on the insertion side of the stator coil 3. The second portion is disposed so as to be located further inside of the inside diameter of the stator core of the stator 1. The dimension in the juxtaposition direction when the first and second portions are in diametric juxtaposition with each is greater than the depth of the slot in the stator core of the stator 1.

The neutral point connection bus bar 101 is disposed on the side of a lower layer which is closest relative to the coil end on the insertion side of the stator coil 3. The joints of the input/output terminal 103, the input/output terminal 103, and the connections of the neutral point connection bus bar 101 are disposed on the side of a higher layer than the neutral point connection bus bar 101 away from the coil end on the insertion side of the stator coil 3. The input/output terminal 103 is disposed at the highest layer of all.

The stator coil 3 is formed as a distributed wave winding.

The resin moldings are separated in a direction along the neutral point connection bus bar 101. As a result, part of the neutral point connection bus bar 101 is exposed to the outside.

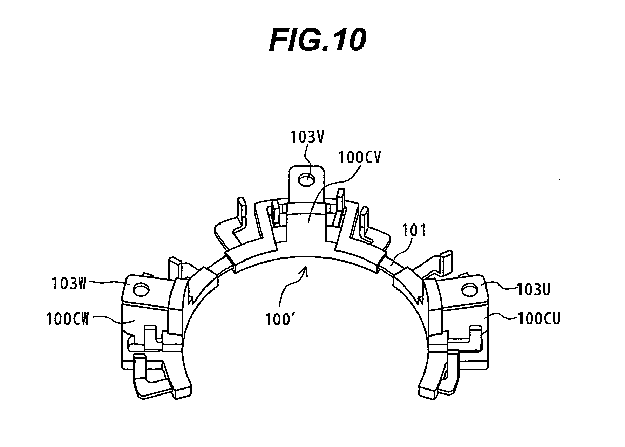

Referring to Fig. 10, a modified example of the neutral conductor connection device 100 and the input/output terminal 103 according to the first embodiment of the present invention will be next described.

Fig. 10 shows the arrangement of the neutral conductor connection device 100 and the input/output terminal 103 of the modified example, as viewed from the axial end of the rotating electric machine.

In Fig. 10, like reference numerals used in Figs. 1 through 7 denote like parts.

In the example shown in Fig. 7, the input/output terminal 103 and the neutral conductor connection device 100 are separated from each other for restrictions of the size of the electrode when they are joined each other and the size of the neutral conductor connection device 100.

Without the above-referenced restrictions, however, the input/output terminal 103 and the neutral conductor connection device 100 can be integrated with each other as shown in Fig. 10. Specifically, a neutral conductor connection device 100' shown in Fig. 10 includes resin moldings 100CU, 100CV, 100CW that mold input/output terminals 103U, 103V, 103W, respectively. This arrangement eliminates the process of positioning the input/output terminal 103.

As described heretofore, in accordance with the first embodiment of the present invention, a plurality of lead wires of the stator coil 3 is withdrawn substantially in parallel with the axial direction further than the axial leading end of the coil end of the stator coil 3 formed at the axial end on one side of the stator core and electrically connected to a plurality of lead wires on the neutral point side by using the neutral point connection bus bar 101. The plurality of lead wires on the neutral point side is not therefore routed above the coil end of the stator coil 3 formed at the axial end on the one side of the stator core. In accordance with the first embodiment of the present invention, therefore, the number of types of deformed lines can be reduced.

In accordance with the first embodiment of the present invention, when a plurality of U- or V-bent segment coils is inserted in the stator core of the stator 1, each of the segment coils is inserted to any position; thereafter, the bent portions of all segment coils are pressed with a jig or the like to press in all segment coils at the same time, facilitating the segment coil insertion process. In this case, as in the known art example, in which the lead wires are routed above the coil end of the stator coil 3 formed at the axial end on one side of the stator core, so that there is a portion of lead wires being routed around (the phase jumpers 801-d, 80b-e, and 80c-f and the neutral point wire connection 81 in the known art example), it is difficult to press all segment coils uniformly even if the bent portions of all segment coils are pressed with a jig or the like. As a result, the length of the leading end of the segment coils protruding from the non-insertion side of the stator core of the stator 1 varies from one segment coil to another. If the length of the leading end of the segment coils varies from one segment coil to another, a narrow mutually effective contact area could result when the leading ends of the segment coils are electrically connected. Alternatively, it is possible to trim the length of the leading ends of the segment coils on the non-insertion side after all segment coils are inserted in the stator core of the stator 1. This adds the cutting process and requires an extra length of material to take into account the cutting process. In accordance with the first embodiment of the present invention, on the contrary, variations in length of the portions of the segment coils protruding from the non-insertion side of the stator core of the stator 1 can be reduced. Accordingly, in accordance with the first embodiment of the present invention, it is easy to connect the leading ends of the segment coils on the non-insertion side.

In accordance with the first embodiment of the present invention, the connections of the neutral point connection bus bar 101 with the neutral point side lead wires and the joints of the input/output terminal 103 with the input/output side lead wires are bent so as to be substantially in parallel with the withdrawn direction of the corresponding lead wire at a position of abutment (tight contact) with the conductor face of the corresponding lead wire. This facilitates achieving the joint area when connecting with the lead wires is made.

Further, in accordance with the first embodiment of the present invention, the neutral point connection bus bar 101 and the input/output terminal 103 have an identical thickness and therefore can be manufactured from the same sheet stock. This achieves reduction in materials cost and simplifies the process of setting conditions during joining, since joining can be performed under the same condition when connecting with the lead wires is made.

If the lead wires of the same phase to be connected together overlap with others of another phase, the lead wires of different phases rub together during assembly; then, the enamel insulation jackets are damaged and it is likely that a short-circuit can be created between the lead wires of different phases. It is also likely that vibrations during operation of the rotating electric machine cause the lead wires of different phases to be rubbed against each other, so that the enamel insulation jackets are damaged and a short-circuit can be created between the lead wires of different phases. Furthermore, because of vibration during operation of the rotating electric machine, the lead wires and the stator core of the stator 1 rub together, so that the enamel insulation jackets are damaged and a short-circuit can be created between the lead wires and the stator core of the stator 1. In accordance with the first embodiment of the present invention, however, the lead wire from the stator coil 3 is withdrawn without allowing the same to overlap circumferentially with a lead wire of another phase and the stator core of the stator 1. Accordingly, the input/output side lead wires of each phase can be joined with the joints of the input/output terminal 103 without allowing the lead wires to overlap the input/output side lead wire of another phase. This prevents the enamel insulation jacket from being damaged.

It is more difficult, and it requires a larger capacity for the joining equipment, to join reliably three conductors at one place than to join two conductors at one place. In accordance with the first embodiment of the present invention, however, a singe lead wire is joined to a single connection or a single joint. The resistance at a portion of the lead wire connecting to the connection or joint can be stabilized and the joining equipment can be simplified.

To connect a terminal directly to an input/output side lead wire of all lead wires, a fixing jig is necessary for holding the terminal at a predetermined position. Further, when an electric connection between coils is made, there may be cases where a brazing metal is sandwiched between conductors of the coils to be connected and an electrode rod is fed from the inside or outside diameter side of the stator to make a brazed joint. In such cases, the position at which the brazing metal is sandwiched and that of the electrode rod are not uniformly and reliably set. This makes it necessary to position the brazing metal and the electrode rod correctly each time a connection is to be made. According to the joining structure of the first embodiment of the present invention, however, the steps included in the joint or connection permit correct positioning of the clad material and the clad material temporarily secures the joint or connection and the lead wire in place, eliminating the need for any fixing jig.

Further, in accordance with the first embodiment of the present invention, the resin molding molds the neutral point connection bus bar 101, which provides insulation between the neutral point connection bus bar 101 and the bent portion of the stator coil 3.

Further, in accordance with the first embodiment of the present invention, the input/output terminal 103 is disposed at the resin molding. This provides insulation between the neutral point connection bus bar 101 and the input/output terminal 103.

Further, in accordance with the first embodiment of the present invention, the protrusions included in the resin molding correctly position the input/output terminal 103, which eliminates the need for any positioning jig.

Further, in accordance with the first embodiment of the present invention, a nut is embedded in the resin molding, so that the resin molding can be used as a terminal block having a connection function with respect to the intermediate bus bar.

Further, in accordance with the first embodiment of the present invention, the leading end of the lead wire and that of the connection or joint are adapted to protrude from the clad material and a portion of the lead wire, from which the enamel insulation jacket is removed, is adapted to reach a point closer to the stator core of the stator 1 than the steps 101F in the connection or joint. A stabilized joint area is thereby achieved.

### [Second Embodiment]

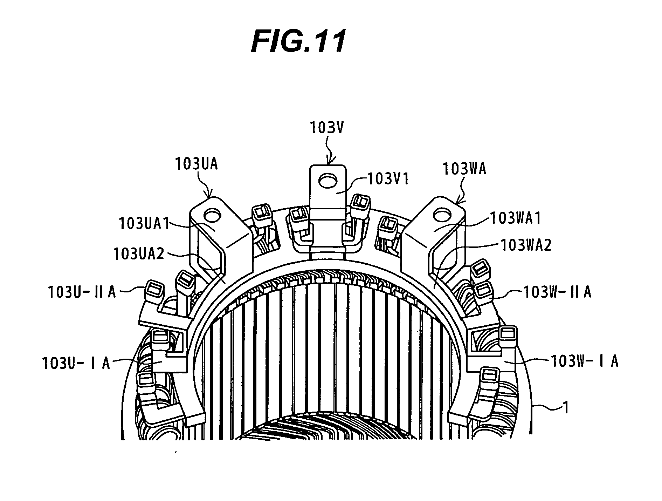

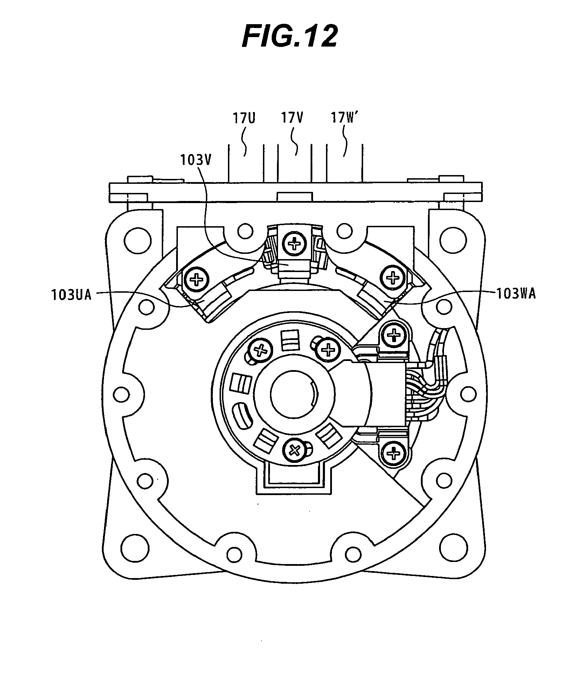

A rotating electric machine according to a second embodiment of the present invention will be described below with reference to Figs. 11 and 12.

The general arrangement of the rotating electric machine according to the second embodiment of the present invention is the same as that shown in Fig. 1. Wire connections of the stator coil used in the rotating electric machine according to the second embodiment of the present invention are the same as those shown in Fig. 3. Further, the shapes of the segment coils and the lead wires used in the stator coil of the rotating electric machine according to the second embodiment of the present invention are the same as those shown in Figs. 4A through 4D.

Fig. 11 shows the wire connection arrangement of the stator coil at the insertion side end of the stator core. Fig. 12 shows the arrangement at a side face of the rotating electric machine according to the second embodiment of the present invention.

As compared with the neutral conductor connection device 100 according to the first embodiment of the present invention shown in Fig. 5, U-phase and W-phase resin moldings of a neutral conductor connection device 100 according to the second embodiment of the present invention are disposed at positions closer to a V-phase resin molding. Of input/output terminals 103UA, 103VA, 103WA according to the second embodiment of the present invention, the input/output terminals 103UA, 103WA are structured slightly differently from the counterparts shown in Fig. 5, while the input/output terminal 103VA is structured in the same way as the counterpart shown in Fig. 5.

Joints 103U-IA, 103U-IIA in the U-phase input/output terminal 103UA are disposed at identical positions as the counterparts shown in Fig. 5. The U-phase input/output terminal 103UA includes an input/output terminal connection 103UA1 to be connected to the U-phase external power terminal 17U shown in Fig. 2. The joints 103U-IA, 103U-IIA and the input/output terminal connection 103UA1 are connected by an input/output terminal conductor bar 103UA2. The input/output terminal connection 103UA1 is disposed on the resin molding. The input/output terminal conductor bar 103UA2 extends circumferentially from a circumferential first end (the side opposite the side of the V-phase resin molding) on a leading end side (opposite an axially perpendicular flat portion) of a diametrically perpendicular flat conductor of the input/output terminal connection 103UA1 toward the joints 103U-IA, 103U-IIA.

The W-phase input/output terminal 103WA is disposed so as to be symmetrical with respect to the U-phase input/output terminal 103UA about a diametrically drawn line with the V-phase input/output terminal 103VA being at the center. The W-phase input/output terminal 103WA includes the same components as the U-phase input/output terminal 103UA.

In the second embodiment of the present invention, use of the input/output terminal conductor bar 103UA2 allows the input/output terminal connection 103UA1 to be disposed away from the joints 103U-IA, 103U-IIA. As a result, the input/output terminal connections 103UA, 103V, 103WA of the three phases can be disposed closely to each other.

Since three-phase alternating current is supplied to the rotating electric machine, the external power terminal 17 shown in Fig. 1 includes a U-phase external power terminal 17U', a V-phase external power terminal 17V, and a W-phase external power terminal 17W'. The U-phase external power terminal 17U' and the W-phase external power terminal 17W' each have a folded leading end.

The example shown in Fig. 2 uses the intermediate bus bars 15U, 15V, 15W, which is not the case in the second embodiment of the present invention. Instead, in accordance with the second embodiment of the present invention, a U-phase external power terminal 17U', a V-phase external power terminal 17V, and a W-phase external power terminal 17W' are directly connected to an input/output terminal connection 103UA1 of an input/output terminal 103UA, an input/output terminal connection 103V1 of an input/output terminal 103V, and an input/output terminal connection 103WA1 of an input/output terminal 103WA, respectively, of a stator coil 3.

In accordance with the second embodiment of the present invention described heretofore, the need for the intermediate bus bar can be eliminated to achieve a simplified structure. In addition, the reduced number of connections made improves workability.

### [Third Embodiment]

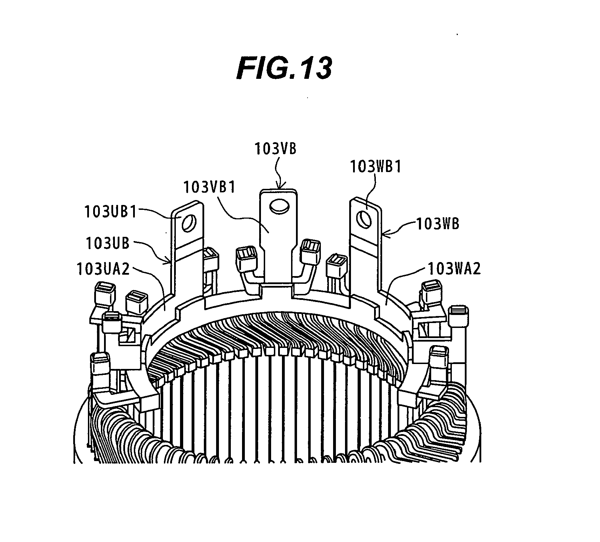

A rotating electric machine according to a third embodiment of the present invention will be described below with reference to Fig. 13.

Fig. 13 shows wire connections of a stator coil on the insertion side of a stator core.

In Fig. 13, like reference numerals used in Figs. 1 through 5, 11, and 12 denote like parts.

The third embodiment of the present invention is an improved example of the second embodiment of the present invention.

A neutral conductor connection device 100 according to the third embodiment of the present invention has no terminal block portion of resin molding. Further, input/output terminals 103UB, 103VB, 103WB according to the third embodiment of the present invention include input/output terminal connections 103UB1, 103VB1, 103WB1 that are not bent diametrically, but extend axially directly from the neutral conductor connection device 100. As a result, in the third embodiment of the present invention, an output terminal of an inverter unit can be directly connected relative to the input/output terminal connections 103UB1, 103VB1, and 103WB1.

In accordance with the third embodiment of the present invention described heretofore, the need for the intermediate bus bar can be eliminated to achieve a simplified structure. In addition, the reduced number of connections made improves workability. Furthermore, direct connection with the output terminal of the inverter unit can be realized.

### [Fourth Embodiment]

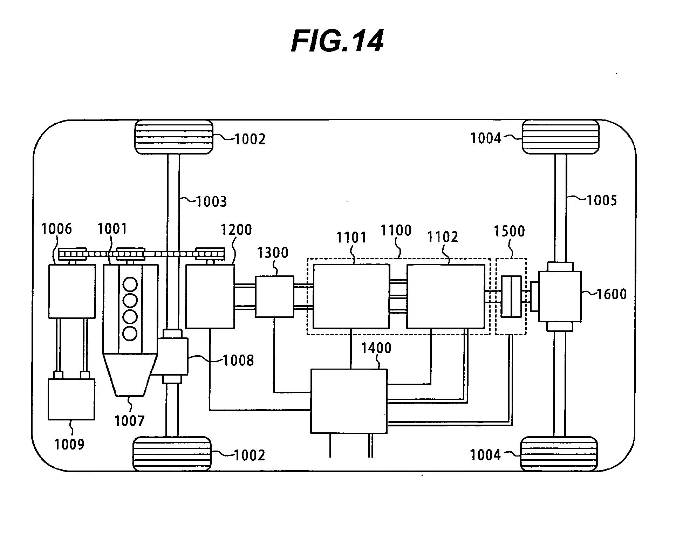

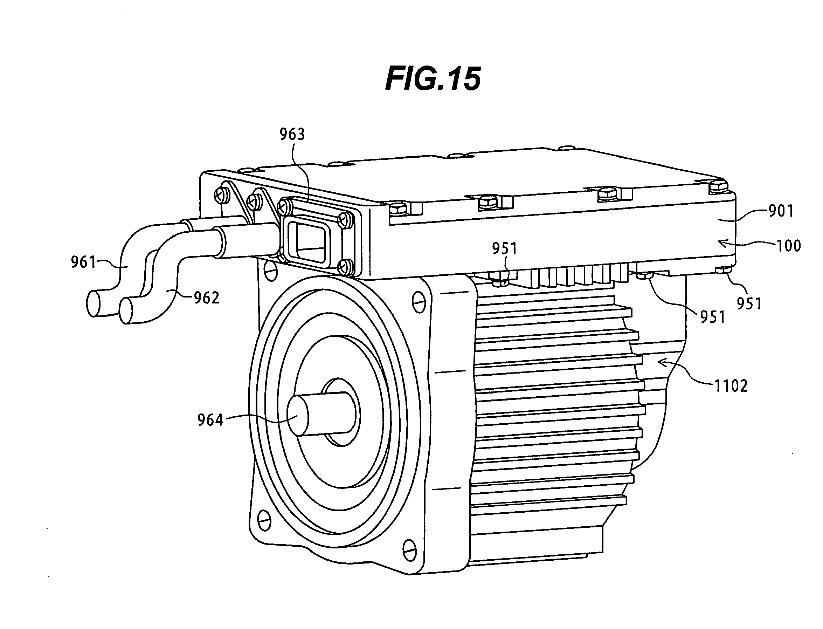

A fourth embodiment of the present invention will be described below with reference to Figs. 14 and 15.

The fourth embodiment of the present invention is an example, in which the rotating electric machine according to the first or second embodiment of the present invention is incorporated in a four-wheel-drive hybrid electric vehicle having no motor drive batteries.

Referring to Fig. 14, arrangements of a drive system for the four-wheel-drive hybrid electric vehicle having no motor drive batteries will be described.

Note that, in Fig. 14, control cables transmitting control signals are shown by narrow solid lines and electric cables supplying electric energy are shown by broad solid lines that are broader than the solid lines showing the control cables.

The four-wheel-drive vehicle having no motor drive batteries (hereinafter referred to as a "four-wheel-drive vehicle 1000") is a combined drive vehicle having a drive system using an engine 1001 and a drive system using a motor 1102. Specifically, the engine 1001 as an internal combustion engine drives front wheels 1002 (main wheels) and the motor 1102 as a rotating electric machine drives rear wheels 1004 (sub-wheels). The engine 1001 is a power source constituting a main drive system for the front wheels 1002, generating a rotating power by using thermal energy throughout an entire running range of the vehicle. The motor 1102 is a power source constituting a sub-drive system for the rear wheels 1004 (sub-wheels). The motor 1102 generates a rotation driving force by using electric energy during a period of time, through which a running speed range using only the engine 1001 is reached from the start of the vehicle, and when the front wheels 1002 driven by the engine 1001 slip and are unable to transmit the power of the engine 1001 to a road surface on a road having a small coefficient of friction µ of the road surface, such as an icy road.

The fourth embodiment of the present invention will be described as an exemplary case, in which the front wheels 1002 are driven by the engine 1001 and the rear wheels 1004 are driven by the motor 1102. An arrangement may also be achieved, in which the rear wheels 1004 are driven by the engine 1001 and the front wheels 1002 are driven by the motor 1102, respectively.

The rotating power of the engine 1001 undergoes a speed change by an automatic transmission 1007 before being transmitted to a drive shaft 1003 of the front wheels 1002 via a power transmission mechanism 1008. Specifically, the front wheels 1002 are driven by the engine 1001 throughout the entire running range of the vehicle.

A vehicle-mounted auxiliary generator 1006 and a drive-exclusive generator 1200 are mechanically connected to the engine 1001 via a belt. Each of the vehicle-mounted auxiliary generator 1006 and the drive-exclusive generator 1200 operates on the rotating power of the vehicle-mounted auxiliary generator 1006 to generate electric power for its own purpose.

The vehicle-mounted auxiliary generator 1006 constitutes a vehicle-mounted 14-volt system power supply, generating a DC electric power for recharging a vehicle-mounted battery 1009 with a nominal output voltage of 12 volts and driving vehicle-mounted auxiliaries.

The drive-exclusive generator 1200 constitutes a motor power supply generating exclusively a drive electric power for the motor 1102 and a vehicle-mounted 42-volt system power supply capable of outputting an electric power greater than that produced by the vehicle-mounted auxiliary generator 1006. The drive-exclusive generator 1200 can vary its output voltage from 0 volts to 50 or 60 volts according to a required driving force for the motor 1102.

The fourth embodiment of the present invention will be described as an exemplary case, in which the drive-exclusive generator 1200 is incorporated as a power supply for the motor 1102. In this case, there is no need to mount a large-capacity battery dedicated to driving the motor, so that a smaller space is required for mounting the sub-drive system for the sub-drive wheels (the rear wheels 1004 according to the fourth embodiment of the present invention), and so that the sub-drive system for the sub-drive wheels can be provided at a lower cost than a mechanical four-wheel-drive vehicle driving the front and rear wheels by means of the engine power.

A motor drive battery may be mounted to use the power of the drive-exclusive generator 1200 for recharging the motor drive battery.

Further, in accordance with the fourth embodiment of the present invention, the motor 1102 is driven by a low voltage and a large current by using the drive-exclusive generator 1200 as a power supply. This ensures the output of a high torque that is required in vehicle running performance, so that a sub-drive system can be provided comparable to the mechanical four-wheel-drive vehicle that drives the front and rear wheels by means of the engine power.

The vehicle-mounted auxiliary generator 1006 and the drive-exclusive generator 1200 are both disposed in an engine compartment together with the engine 1001. Of a water-cooled totally-closed rotating electric machine, the drive-exclusive generator 1200 can be disposed at a lower level relative to the engine 1001 as compared with the vehicle-mounted auxiliary generator 1006 which is of an air-cooled open rotating electric machine.

In accordance with the fourth embodiment of the present invention, having no motor drive batteries as described earlier, the DC power outputted from the drive-exclusive generator 1200 is directly applied to a DC side of an inverter unit 1101 via a relay 1300. The inverter unit 1101 coverts the DC power applied thereto to a three-phase AC power required for driving the motor 1102 and supplies the motor 1102 with the three-phase AC power. Operating on the three-phase AC power received, the motor 1102 generates a rotating power required for driving the rear wheels 1004.

The rotating power of the motor 1102 is transmitted to a drive shaft 1005 of the rear wheels 1004 via a clutch 1500 connected to the output side of the motor 1102 and a differential gear 1600 connected to the output side of the clutch 1500. As a result, the rear wheels 1004 are driven for the period of time, through which the running speed range using only the engine 1001 is reached from the start of the vehicle, and when the front wheels 1002 driven by the engine 1001 slip and are unable to transmit the power of the engine 1001 to the road surface on the road having a small coefficient of friction µ of the road surface, such as an icy road, in a running speed range equal to, or less than, the maximum at which the rear wheels 1004 can be driven by the rotating power of the motor 1102.

In the sub-drive system according to the fourth embodiment of the present invention, therefore, the vehicle can be started and run reliably at high torque and, if the front wheels 1002 slips, the front wheels 1002 can be quickly made to grip to ensure stable and reliable running on a running road having a small coefficient of friction µ.

The differential gear 1600 is a drive transmission mechanism that distributes the rotating power of the motor 1102 between right and left portions of the drive shaft 1005. The differential gear 1600 integrates a reduction gear for reducing the speed of the rotating power of the motor 1102.

The motor 1102 and the inverter unit 1101 are integrated together to form a vehicle drive system (rotating electric machine system) 1100. The vehicle drive system (rotating electric machine system) 1100 is disposed in a narrow and small space located in an underfloor area extending from a vehicle rear seat to a luggage compartment and near the differential gear 1600. In accordance with the fourth embodiment of the present invention, the electromechanical vehicle drive system (rotating electric machine system) 1100 achieves a compactly built vehicle drive system (rotating electric machine system) 1100. At the same time, mountability of the vehicle drive system (rotating electric machine system) 1100 relative to the vehicle can be improved.

Additionally, in accordance with the fourth embodiment of the present invention, an electromechanical rotating electric machine system shown in Fig. 15 is used as the vehicle drive system (rotating electric machine system) 1100. The vehicle drive system (rotating electric machine system) 1100 can therefore be built even more compactly and mountability of the vehicle drive system (rotating electric machine system) 1100 relative to the vehicle can be further improved.

In addition, the vehicle drive system (rotating electric machine system) 1100, the clutch 1500, and the differential gear 1600 may be integrated together into a single unit.

The clutch 1500 is an electromagnetic power shutoff mechanism that controls power transmission by controlling two clutch plates with an electromagnetic force. For the period of time, through which the running speed range using only the engine 1001 is reached from the start of the vehicle, and when the front wheels 1002 driven by the engine 1001 slip and are unable to transmit the power of the engine 1001 to the road surface on the road having a small coefficient of friction µ of the road surface, such as an icy road, in a running speed range equal to, or less than, the maximum at which the rear wheels 1004 can be driven by the rotating power of the motor 1102, control is performed to connected the two clutch plates together, so that the rotating power of the motor 1102 can be transmitted to the differential gear 1600. In a running speed range achieved only with the engine 1001, control is performed to disconnect the two clutch plates from each other, so that transmission of the rotating power from the motor 1102 to the differential gear 1600 can be shut off.

Operation of each of elements constituting the sub-drive system of the rear wheels 1004 is controlled by a signal or power supplied from an electronic circuit unit 1400. The electronic circuit unit 1400 includes a plurality of control boards mounted with a plurality of electronic devices including a microprocessor executing an operation required for controlling different pieces of equipment based on a program, a storage device storing programs, maps, parameters, and other data required for operations performed by the microprocessor, and an integrated circuit (IC) integrating circuit elements such as resistors and the like.

Types of control performed by the electronic circuit unit 1400 include field control, relay control, drive control, and clutch control. Specifically, the field control controls the field current supplied to the drive-exclusive generator 1200, thereby controlling power generated by the drive-exclusive generator 1200. The relay control controls drive of contacts of the relay 1300, thereby controlling electric connection between the drive-exclusive generator 1200 and the inverter unit 1101. The drive control controls the power conversion operation of the inverter unit 1101, thereby controlling the drive of the motor 1102. The clutch control controls energization current supplied to the clutch 1500, thereby controlling connection and disconnection of the clutch 1500.

Each of the elements constituting the sub-drive system of the rear wheels 1004 and the electronic circuit unit 1400 are electrically connected with a signal cable or an electric cable. A vehicle-mounted battery 1009 and the electronic circuit unit 1400 are electrically connected with an electric cable. Each of other vehicle-mounted control units (not shown) and the electronic circuit unit 1400 are electrically connected with a local area network (LAN) cable. Other vehicle-mounted control units include: an engine control unit that controls operations of components (an air throttle valve, air supply/exhaust valves, a fuel injection valve) of the engine 1001, a gearshift mechanism that forms part of the automatic transmission 1007, and the vehicle-mounted auxiliary generator 1006; and an anti-lock brake system control unit controlling operations of a caliper cylinder mechanism that forms part of an anti-lock brake system. This arrangement allows information held by each vehicle-mounted control unit to be shared among the various vehicle-mounted control units. The electronic circuit unit 1400 can therefore obtain as necessary, in the form of input information, a shift position signal, an accelerator opening signal, and an engine speed signal from the engine control unit and a wheel speed signal from the anti-lock brake system control unit. The electronic circuit unit 1400 uses such input information for the above-described controls.

The fourth embodiment of the present invention has been described as an exemplary case, in which the engine control unit controls the operation of the gearshift mechanism forming part of the automatic transmission 1007. If the vehicle is equipped with a transmission control unit, however, the transmission control unit controls the operation of the gearshift mechanism forming part of the automatic transmission 1007. In this case, the shift position signal to be inputted to the electronic circuit unit 1400 is obtained via a LAN cable from the transmission control unit.

Fig. 15 shows an outer construction of a vehicle drive system (rotating electric machine system) 1100 that integrates a motor 1102 and an inverter unit 1101.

Referring to Fig. 15, the inverter unit 1101 is disposed on a rotating electric machine 1102. In accordance with the fourth embodiment of the present invention, the inverter unit 1101 and the rotating electric machine 1102 are integrated with each other as follows. Specifically, screws 951 are threadably screwed between a casing 901 of the inverter unit 1101 and a casing of the rotating electric machine 1102, thereby securing the casing 901 of the inverter unit 1101 to the casing of the rotating electric machine 1102. The dimension of the inverter unit 1101 in a height direction (the direction in which the inverter unit 1101 and the rotating electric machine 1102 are joined together) is half the outside diameter of the rotating electric machine 1102 or less. Such a dimension is extremely preferable for the vehicle drive system (rotating electric machine system) 1100 that is disposed in the narrow and small space located in the underfloor area extending from the vehicle rear seat to the luggage compartment and near the differential gear 1600.

An output shaft 964 protrudes from an end face of the casing of the rotating electric machine 1102 on a first axial end thereof so as to extend horizontally. A positive electrode side DC harness 961 and a negative electrode side DC harness 962 are formed so as to protrude horizontally (in the same direction as the output shaft 964 extends) on a side face of the casing 901 in the direction in which the output shaft 964 extends. The positive electrode side DC harness 961 and the negative electrode side DC harness 962 are electrically connected to the drive-exclusive generator 1200 via the relay 1300 shown in Fig. 14.

An electric connection between the inverter unit 1101 and the rotating electric machine 1102 is established by a bus bar (not shown) extending vertically (in the direction in which the inverter unit 1101 and the rotating electric machine 1102 are joined together) at an end opposite the side of the output shaft 964 of the rotating electric machine 1102. A sensor (resolver) that detects a magnetic pole position of the rotating electric machine 1102 is disposed at the end opposite the side of the output shaft 964 of the rotating electric machine 1102. The sensor has a signal line extending upwardly (in the direction toward the inverter unit 1101 from the rotating electric machine 1102 along the direction in which the inverter unit 1101 and the rotating electric machine 1102 are joined together) at the end opposite the side of the output shaft 964 of the rotating electric machine 1102 and connected electrically to a control circuit of the inverter unit 1101.

The fourth embodiment of the present invention is described as an exemplary case, in which the electric connection between the inverter unit 1101 and the rotating electric machine 1102 is made inside a casing of the vehicle drive system (rotating electric machine system) 1100. The electric connection between the inverter unit 1101 and the rotating electric machine 1102 may nonetheless be made outside the casing of the vehicle drive system (rotating electric machine system) 1100 using a harness or the like.

A connector 963 is mounted on the side face of the casing 901, from which the positive electrode side DC harness 961 and the negative electrode side DC harness 962 protrude. The connector 963 achieves the following functions: specifically, to let the control circuit housed inside the casing 901 of the inverter unit 1101 read input information (e.g. a torque command signal, a speed command signal, a fail signal from a host control unit, and the like) from the host control unit disposed externally relative to the inverter unit 1101; to feed power required for operating the control circuit; and to unload from the inverter unit 1101 output information (e.g. a fail signal from a device on a lower hierarchical level, and the like) to be transmitted to the host control unit. The connector 963 is connected with a connector of a signal line electrically connected to the host control unit and extending to the inverter unit 1101.

The fourth embodiment of the present invention has heretofore been described as the exemplary case, in which the rotating electric machine according to the first to third embodiment of the present invention is incorporated as a drive motor for the sub-drive system in the four-wheel-drive hybrid electric vehicle having no motor drive batteries. The rotating electric machine according to the first to third embodiment of the present invention may be applicable to vehicle-mounted electric machines as described in the following.

One example of such vehicle-mounted electric machines is a vehicular generator that is driven by the driving force of the engine to generate a three-phase AC power, the three-phase AC power being rectified to a DC power by a switching semiconductor device to recharge a 14-volt-system vehicle-mounted battery (nominal output voltage 12 volts).

Another example of such vehicle-mounted electric machines may be a vehicular motor-driven generator that works as follows. Specifically, when the engine is restarted (as when the engine is restarted to start the vehicle after a brief period of temporary stop of the engine at a traffic light), an inverter unit including a switching semiconductor device is used to convert the DC power supplied from the 14-volt system vehicle-mounted battery to a three-phase AC power and the three-phase AC power is supplied to the rotating electric machine; the rotating electric machine is operated as a motor and a generated electric power is transmitted to the engine to start the engine; during an autonomous operation of the engine, the rotating electric machine receives the driving force from the engine to operate as a generator; the generated three-phase AC power is converted to a DC power by the inverter unit and the resultant DC power is used to recharge the 14-volt system vehicle-mounted battery. In this case, the vehicular motor-driven generator is integrated with the inverter unit.

Still another example of such vehicle-mounted electric machines may be a vehicular motor-driven generator that works as follows. Specifically, when the engine is restarted (as when the engine is restarted to start the vehicle after a brief period of temporary stop of the engine at a traffic light) and when the vehicle is accelerated, an inverter unit including a switching semiconductor device is used to convert the DC power supplied from the 42-volt system vehicle-mounted battery (nominal output voltage 36 volts) to a three-phase AC power and the three-phase AC power is supplied to the rotating electric machine; the rotating electric machine is operated as a motor and a generated electric power is transmitted to the engine to start the engine and to the wheels to assist in the driving force of the engine; during an autonomous operation of the engine, the rotating electric machine receives the driving force from the engine to operate as a generator; the generated three-phase AC power is converted to a DC power by the inverter unit and the resultant DC power is used to recharge the 42-volt system vehicle-mounted battery. In this case, a 14-volt system vehicle-mounted battery is connected to the 42-volt system vehicle-mounted battery via a step-up/step-down DC-DC converter.

Features, components and specific details of the structures of the above-described embodiments may be exchanged or combined to form further embodiments optimized for the respective application. As far as those modifications are apparent for an expert skilled in the art they shall be disclosed implicitly by the above description without specifying explicitly every possible combination.

## Claims

1. A rotating electric machine comprising:
a stator (1) including an annular stator core (5) and a stator winding (3) mounted on the stator core (5), configured through a star connection of a plurality of conductor pieces each having a rectangular cross section;
a rotor (6) disposed so as to oppose via an air gap, and rotatably supported by, said stator (1); and
a neutral conductor connection device (100) disposed on an axial first side end of the stator core (5),
wherein the stator (1) comprises a plurality of lead wires (3U-IB, 3U-IIB, ...) extending further axially than a leading end of a winding end formed on the axial first side end of the stator core (5), out of the plurality of lead wires (3U-IB, 3U-IIB, ...) included in the stator winding (3), and
the neutral conductor connection device (100) comprises the conductive plate and a resin molding (100CU) disposed on the conductive plate so as to mold part of the conductive plate, and
wherein a plurality of lead wires (3U-IB, 3U-IIB, ...) on a neutral point side of the star connection being connected by a conductive plate.

2. The rotating electric machine according to claim 1, wherein:
the conductive plate is formed arcuately from a single sheet stock;
the conductive plate includes a plurality of connections formed thereon, the connections being connected to the plurality of lead wires (3U-IB, 3U-IIB, ...) on the neutral point side; and
the plurality of connections is bent so as to extend substantially in parallel with a withdrawing direction of corresponding lead wires on the neutral point side at a position of abutment with the corresponding plurality of lead wires (3U-IB, 3U-IIB) on the neutral point side.

3. The rotating electric machine according to claim 1 or 2, wherein:
the conductive plate includes a plurality of connections (101U-IB-101WIIB) formed thereon corresponding in number with the plurality of lead wires (3U-IB, 3U-IIB) on the neutral point side, the connections being connected to the plurality of lead wires (3U-IB, 3U-IIB, ...) on the neutral point side; and
the connections (101U-IB-101WIIB) and the plurality of lead wires (3U-IB, 3U-IIB, ...) on the neutral point side are connected to each other in a one-to-one relation.

4. The rotating electric machine according to any of claims 1-3, further comprising:
an input/output terminal (103) to be connected to an input/output side lead wire of the star connection, out of the plurality of lead wires (3U-IB, 3U-IIB, ...), wherein:
the input/output terminal (103) is held by the resin molding (100CU); and
the resin molding (100CU) includes irregularities for positioning the input/output terminal (103).

5. The rotating electric machine according to claim 4, wherein:
the input/output terminal (103) is formed integrally with said neutral conductor connection device (100).

6. The rotating electric machine according to claim 4, wherein:
the conductive plate and the input/output terminal (103) are manufactured from a sheet stock having an identical thickness.

7. The rotating electric machine according to any of claims 4-6, wherein:
the resin molding (100CU) includes a screwing member; and
an electric connection terminal between the input/output terminal (103) and an external device is fixed onto the resin molding (100CU) in a condition of being in contact with the input/output terminal (103) as a screw is threadably screwed in the screwing member.

8. The rotating electric machine according to claim 2 or 3, wherein:
the plurality of lead wires (3U-IB, 3U-IIB, ...) on the neutral point side and the connections (101U-IB-101W-IIB) are connected to each other through joining by means of a joining member; and
the plurality of lead wires (3U-IB, 3U-IIB, ...) on the neutral point side and the connections include positioning steps (101F) formed thereon for the joining member.

9. The rotating electric machine according to claim 8, wherein:
an insulation jacket applied to a portion of each of the plurality of lead wires (3U-IB, 3U-IIB, ...) on the neutral point side connected to a corresponding one of the connections is removed; and
a leading end of the portion of each of the plurality of lead wires (3U-IB, 3U-IIB, ...) on the neutral point side connected to the corresponding one of the connections and a leading end of each of the connections protrude from the joining member.

10. A rotating electric machine comprising:
a core having a plurality of slots formed therein;
a polyphase winding formed from a plurality of phase windings electrically connected to each other, each phase winding including a plurality of segment conductors accommodated in the plurality of slots and withdrawn externally from both ends of said core, the segment conductors being electrically connected to each other; and
a winding termination device including, at an end on a first side of said core, a neutral point side connection conductor electrically connecting a plurality of neutral point side terminal conductors of a plurality of terminal conductors of the plurality of phase windings, a terminal block formed from a resin having an insulating property, and a plurality of external terminals electrically connected to a plurality of external lead-out side terminal conductors of the plurality of terminal conductors,
the terminal block molding part of the neutral point side connection conductor being disposed on the neutral point side connection conductor; and
the plurality of external terminals having connections with other conductors placed on the terminal block.

11. A rotating electric machine comprising:
a core;
a polyphase winding disposed on said core and formed by wiring a plurality of phase windings; and
a winding termination device including, at an end on a first side of said core, a neutral point side connection conductor electrically connecting a plurality of neutral point side terminal conductors of a plurality of terminal conductors of the plurality of phase windings, an external lead-out side connection conductor electrically connecting a plurality of external lead-out side terminal conductors and a plurality of external terminals of the plurality of terminal conductors, a neutral point side connection terminal withdrawn from the neutral point side connection conductor to the neutral point side terminal conductor and connected to the neutral point side terminal conductor, and an external lead-out side connection terminal withdrawn from the external lead-out side connection conductor to the external lead-out side terminal conductor and connected to the external lead-out side terminal conductor,
wherein the plurality of phase windings are formed as a distributed wave winding,
the neutral point side connection terminal and the external lead-out side connection terminal being disposed closely to each for each phase so as to correspond to positions at which the neutral point side terminal conductor and the external lead-out side terminal conductor are disposed, and
the neutral point side terminal conductor and the external lead-out side terminal conductor are withdrawn from the end of said core onto a side of said winding termination device so as to be disposed closely to each other for each phase.

12. A vehicle-mounted electric machine comprising:
a rotating electric machine mounted on a vehicle, electrically connected to a vehicle-mounted power supply and being one according to any one of claims 1, 10, and 11; and
a control unit disposed between the rotating electric machine and the vehicle-mounted power supply, the control unit for controlling an electric power.

13. The vehicle-mounted electric machine according to claim 12, wherein:
the rotating electric machine is a motor generating a driving force for a wheel which is, of front and rear wheels, not one driven by an internal combustion engine;
the control unit is an inverter unit converting a DC electric power to an AC electric power; and
the motor generates the driving force by using an AC electric power converted by the inverter unit from a DC electric power supplied from a generator which serves as the vehicle-mounted power supply and is driven by the internal combustion engine.

14. The vehicle-mounted electric machine according to claim 12, wherein:
the rotating electric machine is a motor-driven generator connected mechanically to an internal combustion engine, the motor-driven generator generating a starting driving force when the internal combustion engine is to be started to supply the internal combustion engine with the starting driving force; generating an AC electric power when the motor-driven generator receives a driving force from the internal combustion engine to supply the control unit with the AC electric power; and outputting an assist driving force to the wheels during acceleration of the vehicle; and
the control unit is an inverter unit controlling exchange of an electric power between a battery as the vehicle-mounted power supply and the motor-driven generator.

15. The vehicle-mounted electric machine according to claim 12, wherein:
the rotating electric machine is a motor-driven generator connected mechanically to an internal combustion engine, the motor-driven generator generating a starting driving force when the internal combustion engine is to be started to supply the internal combustion engine with the starting driving force and generating an AC electric power when the motor-driven generator receives a driving force from the internal combustion engine to supply the control unit with the AC electric power; and
the control unit is an inverter unit controlling exchange of an electric power between a battery as the vehicle-mounted power supply and the motor-driven generator.
